(19) **Europäisches Patentamt / European Patent Office / Office européen des brevets**

(11) **EP 4 694 508 A1**

(12) **EUROPEAN PATENT APPLICATION**
published in accordance with Art. 153(4) EPC

(43) Date of publication:
**11.02.2026 Bulletin 2026/07**

(21) Application number: **24799822.2**

(22) Date of filing: **05.01.2024**

(51) International Patent Classification (IPC):
*H04W 72/40* (2023.01)    *H04W 72/54* (2023.01)

(52) Cooperative Patent Classification (CPC):
H04W 24/02; H04W 72/40; H04W 72/50;
H04W 72/54; H04W 72/56; H04W 76/27

(86) International application number:
**PCT/CN2024/070932**

(87) International publication number:
**WO 2024/227364 (07.11.2024 Gazette 2024/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   04.05.2023   CN 202310491891
          15.05.2023   CN 202310544376

(71) Applicant: **Huawei Technologies Co., Ltd.**
**Shenzhen, Guangdong 518129 (CN)**

(72) Inventors:
• **WEI, Xiuhong**
 **Shenzhen, Guangdong 518129 (CN)**
• **HE, Hongli**
 **Shenzhen, Guangdong 518129 (CN)**
• **BI, Shuangkaisheng**
 **Shenzhen, Guangdong 518129 (CN)**
• **LI, Xueru**
 **Shenzhen, Guangdong 518129 (CN)**

(74) Representative: **Goddar, Heinz J.**
 **Boehmert & Boehmert**
 **Anwaltspartnerschaft mbB**
 **Pettenkoferstrasse 22**
 **80336 München (DE)**

(54) **RESOURCE EXCLUSION METHOD AND APPARATUS**

(57)   This application relates to a resource exclusion method and an apparatus. A first terminal device receives first SCI from a second terminal device, where the first SCI indicates a first resource. The first terminal device determines, based on first RSRP and a first threshold list, whether to exclude a second resource from a candidate resource set, where the first RSRP is RSRP corresponding to the first SCI, and the second resource includes a resource that shares a same time domain position as that the first resource and is adjacent to the first resource in a frequency domain position. This is equivalent to that when resource exclusion is performed, both resources indicated by SCI of other terminal devices and resources adjacent to those indicated by the SCI of the other terminal devices can be excluded. This approach significantly reduces interference between the terminal devices and enhances information transmission quality.

FIG. 4

**Description**

CROSS-REFERENCE TO RELATED APPLICATIONS

This application claims priorities to Chinese Patent Application No. 202310491891.4, filed with the China National Intellectual Property Administration on May 4, 2023 and entitled "RESOURCE DETERMINING METHOD AND APPARATUS", and to Chinese Patent Application No. 202310544376.8, filed with the China National Intellectual Property Administration on May 15, 2023 and entitled "RESOURCE EXCLUSION METHOD AND APPARATUS", both of which are incorporated herein by reference in their entireties.

TECHNICAL FIELD

This application relates to the field of communication technologies, and in particular, to a resource exclusion method and an apparatus.

BACKGROUND

There are mainly two modes (modes) for resource allocation in sidelink (sidelink, SL) communication: mode 1 and mode 2. Mode 1 is implemented through network scheduling, and mode 2 is implemented through user equipment (user equipment, UE autonomous selection. Under the mode 2, a UE listens to sidelink control information (sidelink control information, SCI) from other UEs in advance and measures corresponding received power, to select, based on the information, resources that have not been reserved by other UEs or resources that have been reserved by other UEs but corresponding received power is low. This avoids interference between UEs caused by occupation of a same transmission resource.

However, for any UE A, in addition to potential interference from transmissions on resources reserved by other UEs to the UE A, transmission on resources adjacent to the resources reserved by the other UEs may also cause interference to the UE A, resulting in degraded transmission quality.

SUMMARY

Embodiments of this application provide a resource exclusion method and an apparatus, to improve transmission quality.

According to a first aspect, a first resource exclusion method is provided. The method may be performed by a terminal device, may be performed by another device having a function of the terminal device, or may be performed by a chip system (or a chip) or another functional module. The chip system or the functional module can implement the function of the terminal device, and the chip system or the functional module is disposed, for example, in the terminal device. The terminal device is, for example, a first terminal device. The method includes: receiving first SCI from a second terminal device, where the first SCI indicates a first resource; and determining, based on first RSRP and a first threshold list, whether to exclude a second resource from a candidate resource set, where the first RSRP is RSRP corresponding to the first SCI, and the second resource includes a resource that shares a same time domain position as that the first resource and is adjacent to the first resource in a frequency domain position.

In this embodiment of this application, the first terminal device may exclude, based on the first threshold list, resources adjacent (for example, indirectly adjacent and/or directly adjacent in frequency domain) to resources indicated by SCI of other terminal devices. This is equivalent to that when resource exclusion is performed, both the resources indicated by the SCI of the other terminal devices and the resources adjacent to those indicated by the SCI of the other terminal devices can be excluded. This reduces interference between the terminal devices to a greater extent, and enhances information transmission quality.

In an optional implementation, determining, based on the first RSRP and the first threshold list, whether to exclude the second resource from the candidate resource set includes: excluding the second resource from the candidate resource set when the first RSRP is greater than at least one threshold in the first threshold list. If the first RSRP is greater than the at least one threshold in the first threshold list, it indicates that transmission performed by the second terminal device on the second resource may cause interference to the first terminal device. Therefore, the first terminal device may exclude the second resource.

In an optional implementation, the first threshold list includes at least two thresholds including a first threshold and a second threshold, the first threshold is adjacent to the second threshold, the second threshold is greater than the first threshold, and excluding the second resource from the candidate resource set when the first RSRP is greater than the at least one threshold in the first threshold list includes: excluding $M_1$ resources corresponding to the first threshold from the candidate resource set when the first RSRP is greater than the first threshold and less than or equal to the second threshold; or if the first threshold list further includes a third threshold, the third threshold is adjacent to the second threshold, and the third threshold is greater than the second threshold, excluding $M_2$ resources corresponding to the second threshold from the candidate resource set when the first RSRP is greater than the second threshold and less than or equal to the third threshold, where $M_1$ and $M_2$ are both positive integers, and $M_2$ is greater than $M_1$. The first threshold list may include at least two different thresholds. When the thresholds are different, it indicates that interference levels are different. In this case, when the thresholds are different, quantities of resources included in the second threshold may be different. Therefore, different thresholds in the first threshold list may correspond to different quantities of resources. For example, a quantity of resources that corresponds to the first threshold is $M_1$, and a quantity of resources that corresponds to the second threshold is $M_2$. Based on a relationship between the first RSRP and the threshold, a quantity of resources included in the second resource may be determined, thereby reducing interference through resource exclusion, and trying to avoid excluding a resource with no interference or small interference.

In an optional implementation, the first threshold list includes at least one threshold, and excluding the second resource from the candidate resource set when the first RSRP is greater than the at least one threshold in the first threshold list includes: excluding $M_r$ resources corresponding to a last threshold from the candidate resource set when the first RSRP is greater than the last threshold in the at least one threshold, where $M_r$ is a positive integer. If the first threshold list includes only one threshold, the threshold is considered as any threshold in the first threshold list, for example, considered as the last threshold in the first threshold list; or if the first threshold list includes a plurality of thresholds, a largest threshold in the plurality of thresholds may be considered as the last threshold in the first threshold list. Each threshold in the first threshold list may correspond to one resource quantity. Therefore, if the first RSRP is greater than the last threshold, the first terminal device may exclude a quantity of resources corresponding to the last threshold.

In an optional implementation, the first SCI further indicates a second priority corresponding to the second terminal device, or indicates a second threshold list corresponding to the second terminal device, where the first threshold list is determined based on a first priority or a third threshold list, and the second priority or the second threshold list, the third threshold list is a threshold list corresponding to the first terminal device, and the first priority is a priority corresponding to the first terminal device. It may be understood as that the first terminal device may determine the first threshold list based on both information about the first terminal device and information about the second terminal device. In this manner, not only interference caused by the second terminal device to the first terminal device can be reduced as much as possible, but also interference caused by the first terminal device to the second terminal device can be reduced as much as possible.

In an optional implementation, the method further includes: receiving first information from a network device, where the first information includes first indication information; and determining the first threshold list based on the first indication information; or receiving first information from a network device, where the first information includes a second mapping relationship; determining first indication information based on the second mapping relationship; and determining the first threshold list based on the first indication information, where the second mapping relationship includes a mapping relationship between QoS information of a service and the first indication information; or determining first indication information based on a preconfigured or predefined second mapping relationship, and determining the first threshold list based on the first indication information, where the first indication information indicates the first priority corresponding to the first terminal device, or indicates the third threshold list corresponding to the first terminal device. The first threshold list may be indicated by the network device, so that implementation of the first terminal device can be simplified. Alternatively, the first terminal device may determine the first threshold list based on the second mapping relationship, so that the first threshold list can be determined even if the first terminal device is in an RRC nonconnected state (for example, including an RRC inactive state or an RRC idle state). This extends an application scenario of this embodiment of this application.

In an optional implementation, the second mapping relationship includes a mapping relationship between the QoS information of the service, capability information of a terminal device, and the first indication information. The first threshold list is mainly used to avoid interference from an adjacent frequency domain resource. The first threshold list is not only related to the QoS information of the service, but also may be related to a capability of the terminal device. Therefore, the second mapping relationship may include the capability information of the terminal device.

In an optional implementation, the first information further indicates a value list of M, and M is a quantity of resources included in the second resource. As described above, in the first threshold list, different thresholds may correspond to different quantities of resources, and therefore, quantities of resources corresponding to thresholds included in the first threshold list may form a value list. The first information may also indicate the value list, so that the first terminal device can determine a corresponding quantity of resources based on a relationship between the first RSRP and the threshold in the first threshold list.

In an optional implementation, a value list of M is preconfigured or predefined; or a value list of M is configured by using resource pool configuration information, and the resource pool configuration information is used to configure a resource pool for the first terminal device, where M is a quantity of resources included in the second resource. In this implementation, the value list of M does not need to be indicated by the network device, and the first terminal device may independently determine the value list of M. Therefore, signaling overheads can be reduced, and the value list of M can be determined even if the first terminal device is in an RRC nonconnected state.

In an optional implementation, the method further includes: measuring information corresponding to the first SCI, to obtain second RSRP, where the first RSRP is the second RSRP; or measuring information corresponding to the first SCI, to obtain the second RSRP, where the first RSRP is obtained based on the second RSRP and interference processing information of the first terminal device. The first terminal device may directly use RSRP obtained through measurement as the first RSRP, or may perform corresponding processing on RSRP obtained through measurement, to obtain the first RSRP. This is flexible.

In an optional implementation, when the first RSRP is obtained based on the second RSRP and the interference processing information, the first threshold list includes one threshold, and the threshold represents maximum tolerable interference power of the first terminal device. If the first RSRP is obtained based on the second RSRP and the interference processing information, the first RSRP may be considered as power of interference caused to the first UE. In this case, the first threshold list does not need to include a plurality of thresholds, and needs to include only the threshold representing the maximum tolerable interference power of the first terminal device, so that a resource can be excluded, and the first threshold list can be simplified. In addition, resource exclusion is performed by using the maximum tolerable interference power of the first terminal device, so that an exclusion result can be more accurate.

In an optional implementation, measuring the information corresponding to the first SCI, to obtain the second RSRP includes: measuring a DMRS carried on a PSCCH on which the first SCI is located, to obtain third RSRP, where the third RSRP is the second RSRP, or the second RSRP is obtained based on the third RSRP and a power difference; measuring a DMRS carried on a PSSCH scheduled by using the first SCI, to obtain third RSRP, where the third RSRP is the second RSRP, or the second RSRP is obtained based on the third RSRP and a power difference; measuring a signal scheduled by using the first SCI, to obtain the second RSRP; or measuring the first SCI, to obtain the second RSRP, where the first SCI is a sequence. The first terminal device may obtain the second RSRP in different manners. This is flexible.

In an optional implementation, the first resource includes one subchannel or a plurality of consecutive subchannels, the second resource includes the M resources, M is an even number, and the M resources include M/2 subchannels whose end frequency domain position is a start frequency domain position of the first resource, and include M/2 subchannels whose start frequency domain position is an end frequency domain position of the first resource.

In an optional implementation, the first resource includes N interlaces, the second resource includes the M resources, and the M resources include one or more of the following: N1 interlaces whose end frequency domain position is a start frequency domain position of the first resource; N2 interlaces whose start frequency domain position is an end frequency domain position of the first resource; or N3 interlaces between the N interlaces, where the N3 interlaces are all interlaces between the N interlaces, where N1+N3+N3=M.

In an optional implementation, the first resource is in one interlace group or a plurality of consecutive interlace groups, the second resource includes the M resources, and the M resources include one or more of the following: a remaining interlace other than the first resource in the one or more interlace groups; all interlaces in K1 interlace groups whose end frequency domain position is a start frequency domain position of a start interlace group of the first resource; or all interlaces in K2 interlace groups whose start frequency domain position is an end frequency domain position of an end interlace group of the first resource, where K1+K2=M-1.

When "resources" represent different meanings, the M resources may have different implementations.

In an optional implementation, the method further includes: receiving second SCI from a third terminal device, where the second SCI is associated with a third resource in the candidate resource set, and a time domain position of the third resource is the same as the time domain position of the first resource; and determining, based on fourth RSRP, the first RSRP, and a fourth threshold, whether to exclude the third resource, where the fourth RSRP is RSRP corresponding to the second SCI. There are still a part of resources, and interference caused by a single terminal device to the resources may be small, but total interference caused by a plurality of terminal devices to the resources may exceed the maximum tolerable interference power of the first terminal device. Therefore, in this embodiment of this application, a resource to which the plurality of terminal devices cause large total interference may be excluded in an RSRP superimposition manner, to improve information transmission quality.

In an optional implementation, the method further includes: receiving SCI from another terminal device in a part or all of resource pools supported by the first terminal device. The first terminal device may perform listening only in a resource pool to which the candidate resource set belongs, or may perform resource listening in another resource pool supported by the first terminal device (for example, configured for the first terminal device), to exclude an interfered resource in a larger range.

In an optional implementation, the second resource and the first resource are within a first bandwidth range, and the first bandwidth range is a signal detection range supported by the first terminal device. For a resource that does not belong to the signal detection range supported by the first terminal device, the first terminal device may not need to perform resource exclusion, to reduce power consumption of the first terminal device.

According to a second aspect, a second resource exclusion method is provided. The method may be performed by a terminal device, may be performed by another device having a function of the terminal device, or may be performed by a chip system (or a chip) or another functional module. The chip system or the functional module can implement the function of the terminal device, and the chip system or the functional module is disposed, for example, in the terminal device. The terminal device is, for example, a second terminal device. The method includes: sending first SCI, where the first SCI indicates a first resource, and indicates a second priority corresponding to the second terminal device, or indicates a second threshold list corresponding to the second terminal device.

For example, a first terminal device may determine, based on the second priority or the second threshold list, a first threshold list finally used by the first terminal device, to exclude, based on the first threshold list, resources adjacent to resources indicated by SCI of other terminal devices. This is equivalent to that the first terminal device may determine the first threshold list based on both information about the first terminal device and information about the second terminal device. In this manner, not only interference caused by the second terminal device to the first terminal device can be reduced as much as possible, but also interference caused by the first terminal device to the second terminal device can be reduced as much as possible.

According to a third aspect, a third resource exclusion method is provided. The method may be performed by a network device, may be performed by another device having a function of the network device, or may be performed by a chip system (or a chip) or another functional module. The chip system or the functional module can implement the function of the network device, and the chip system or the functional module is disposed, for example, in the network device. The network device is, for example, an access network device like a base station. For example, the access network device is an access network device on which a first terminal device camps, or an access network device serving the first terminal device. The method includes: sending first information, where the first information includes first indication information or a second mapping relationship, the second mapping relationship includes a mapping relationship between QoS information of a service and the first indication information, the first indication information is used to determine a first threshold list, and the first threshold list includes an RSRP threshold used to exclude a resource.

In an optional implementation, the second mapping relationship includes a mapping relationship between the QoS information of the service, capability information of a terminal device, and the first indication information.

In an optional implementation, the first information further indicates a value list of M, and M is a quantity of resources excluded based on the first threshold list.

For technical effects brought by the third aspect or the optional implementations, refer to the descriptions of the technical effects of the first aspect or the corresponding implementations.

According to a fourth aspect, a communication apparatus is provided. The communication apparatus may be the first terminal device in the first aspect. The communication apparatus has a function of the foregoing first terminal device. The communication apparatus is, for example, the first terminal device, a large device including the first terminal device, or a functional module, for example, a baseband apparatus or a chip system, in the first terminal device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the technical unit) is configured to receive first SCI from a second terminal device, where the first SCI indicates a first resource. The processing unit is configured to determine, based on first RSRP and a first threshold list, whether to exclude a second resource from a candidate resource set, where the first RSRP is RSRP corresponding to the first SCI, and the second resource includes a resource that shares a same time domain position as that the first resource and is adjacent to the first resource in a frequency domain position.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the first terminal device in the first aspect.

According to a fifth aspect, a communication apparatus is provided. The communication apparatus may be the second terminal device in the second aspect. The communication apparatus has a function of the foregoing second terminal device. The communication apparatus is, for example, the second terminal device, a large device including the second terminal device, or a functional module, for example, a baseband apparatus or a chip system, in the second terminal device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions in the fourth aspect.

In an optional implementation, the transceiver unit (or a sending unit) is configured to send first SCI, where the first SCI indicates a first resource, and indicates a second priority corresponding to the second terminal device, or indicates a second threshold list corresponding to the second terminal device.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the second terminal device in the second aspect.

According to a sixth aspect, a communication apparatus is provided. The communication apparatus may be the network device in the third aspect. The communication apparatus has a function of the foregoing network device. The communication apparatus is, for example, the network device, a large device including the network device, or a functional module, for example, a baseband apparatus or a chip system, in the network device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions in the fourth aspect.

In an optional implementation, the transceiver unit (or a sending unit) is configured to send first information, where the first information includes first indication information or a second mapping relationship, the second mapping relationship includes a mapping relationship between QoS information of a service and the first indication information, the first indication information is used to determine a first threshold list, and the first threshold list includes an RSRP threshold used to exclude a resource.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the network device in the third aspect.

According to a seventh aspect, a communication apparatus is provided. The communication apparatus may be a first terminal device, or a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to an eighth aspect, a communication apparatus is provided. The communication apparatus may be a second terminal device, or a chip or a chip system used in the second terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the second terminal device in the foregoing aspects.

According to a ninth aspect, a communication apparatus is provided. The communication apparatus may be a network device, or a chip or a chip system used in the network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the network device in the foregoing aspects.

According to a tenth aspect, a communication system is provided, and includes a first terminal device and a second terminal device. The first terminal device is configured to perform the method performed by the first terminal device in the first aspect. The second terminal device is configured to perform the method performed by the second terminal device in the second aspect. For example, the first terminal device may be implemented by the communication apparatus in the fourth aspect or the seventh aspect, and the second terminal device may be implemented by the communication apparatus in the fifth aspect or the eighth aspect.

Optionally, the communication system further includes a network device, configured to perform the method performed by the network device in the third aspect. For example, the network device may be implemented by the communication apparatus in the sixth aspect or the ninth aspect.

According to an eleventh aspect, a computer-readable storage medium is provided. The computer-readable storage medium is configured to store a computer program or instructions. When the computer program or the instructions are run, the method performed by the first terminal device, the second terminal device, or the network device in the foregoing aspects is implemented.

According to a twelfth aspect, a computer program product including instructions is provided. When the computer program product runs on a computer, the methods in the foregoing aspects are implemented.

According to a thirteenth aspect, a chip system is provided, and includes a processor and an interface. The processor is configured to: invoke instructions from the interface and run the instructions, to enable the chip system to implement the methods in the foregoing aspects.

BRIEF DESCRIPTION OF DRAWINGS

FIG. 1 is a diagram of a current resource selection method;

FIG. 2 is a diagram of interference between sensing UEs;

FIG. 3 is a diagram of a communication network architecture to which an embodiment of this application is applicable;

FIG. 4 is a flowchart of a resource exclusion method according to an embodiment of this application;

FIG. 5A is a diagram in which a first UE performs resource listening in one resource pool according to an embodiment of this application;

FIG. 5B is a diagram in which a first UE performs resource listening in a plurality of resource pools according to an embodiment of this application;

FIG. 6 is a diagram of a first threshold list and M that corresponds to thresholds in the first threshold list according to an embodiment of this application;

FIG. 7 is a diagram in which different RSRP corresponds to different M according to an embodiment of this application;

FIG. 8A is a diagram of subchannels included in M resources according to an embodiment of this application;

FIG. 8B is a diagram of interlaces or interlace groups included in M resources according to an embodiment of this application;

FIG. 9 is a diagram in which a UE performs resource exclusion based on a plurality of pieces of SCI according to an embodiment of this application;

FIG. 10 is a diagram of an apparatus according to an embodiment of this application; and

FIG. 11 is a diagram of another apparatus according to an embodiment of this application.

DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, a sequence, a time sequence, priorities, importance, or the like of the plurality of objects. For example, a first resource and a second resource may be a same resource, or may be different resources. In addition, such names do not indicate that the two resources have different positions, purposes, carried content, sizes, application scenarios, priorities, importance, or the like. In addition, step numbers in embodiments described in this application are merely intended to distinguish between different steps, but are not intended to limit a sequence of the steps.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, may be widely used in various scenarios, and includes, for example, but is not limited to terminal devices in the following scenarios: a sensing scenario, cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, smart wearable, smart transportation, a smart city (smart city), an uncrewed aerial vehicle, and a robot. The terminal device may sometimes be referred to as a UE, a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, the technical solutions provided in embodiments of this application are described by using an example in which the apparatus configured to implement the function of the terminal device is a terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after the 3rd generation partnership project (3rd generation partnership project, 3GPP), an access node, a wireless relay node, and a wireless backhaul node in a wireless fidelity (wireless fidelity, Wi-Fi) system, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a V2X technology may be a road side unit (road side unit, RSU). The following provides descriptions by using an example in which the access network device is a base station. The base station may communicate with the terminal device, or may communicate with the terminal device via a relay station. The terminal device may communicate with a plurality of base stations in different access technologies. The core network device is configured to implement mobility management, data processing, session management, policy and charging, and the like. Names of devices that implement a core network function in systems using different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement the function of the network device is a network device.

In embodiments of this application, a device that can implement a sensing function may be referred to as a sensing device. The sensing device may include a network device (which may be referred to as a sensing network device), a UE (which may be referred to as a sensing UE), and/or the like. For example, a sensing device is a radar. The sensing device may sense a target in a self-sending and self-receiving manner. For example, the sensing device may send an SL sensing reference signal, and may receive an echo signal reflected after the SL sensing reference signal reaches the target. The sensing device may sense information such as a distance from the target and a speed of the target by comparing the SL sensing reference signal with the echo signal. Wireless sensing performance depends on two dimensions: time and a bandwidth. Longer time indicates that a higher speed resolution can be obtained. A larger bandwidth indicates that a higher distance resolution can be obtained.

The sensing device may not have a communication module. In this case, the sensing device does not have a communication function. For example, the sensing device does not have functional modules such as a channel encoding/decoding module and a modulation/-demodulation module. Alternatively, the sensing device may have a simple communication module, but the sensing device has only a weak communication function, and cannot implement a complex communication function, for example, cannot generate and/or parse a physical sidelink shared channel (physical sidelink broadcast channel, PSBCH).

In a mode 2, the UE listens to resource reservation information from another UE in advance and measures corresponding received power, to select, based on this, a resource that is not reserved by the another UE or a resource that has been reserved by the another UE but corresponds to low received power, so as to avoid interference between the UEs in advance.

Resource reservation is a prerequisite for this resource selection manner. Specifically, the resource reservation information is included in SCI. When sending a data signal or a reference signal, the UE also sends the SCI, to indicate a transmission resource, a transmission mode, and the like of the data signal or the reference signal. For example, in existing SL communication, the UE always sends a physical sidelink control channel (physical sidelink control channel, PSCCH) and a physical sidelink data channel (physical sidelink shared channel, PSSCH) in one slot (slot), the PSCCH is used to carry first-order SCI, and the PSSCH is used to carry second-order SCI and the data signal. The first-order SCI includes related information used by the another UE to perform resource listening. For example, the first-order SCI indicates a time domain resource and a frequency domain resource of a scheduled PSSCH, a priority of the scheduled PSSCH, a pattern (pattern) of a demodulation reference signal (demodulation reference signal, DMRS) carried on the PSSCH, and the like. The time domain resource and the frequency domain resource of the scheduled PSSCH not only include a resource used for current transmission (including initial transmission and/or retransmission), but also may include a transmission resource in a next periodicity, and the resource used for the current transmission and the transmission resource in the next periodicity may be indicated by a resource reservation periodicity field included in the first-order SCI. It is assumed that a current resource pool (resource pool, RP) allows periodic reservation. If SCI sent by a UE at a moment t indicates a resource A, and a value indicated by a resource reservation periodicity field in the SCI is 100 ms, it indicates that the UE reserves, for a next time of transmission, a resource that is of t+100 ms and that is at a same frequency domain position as the resource A. Similarly, in an SL sensing process, the UE sends SCI to indicate a transmission resource of a sensing reference signal, and the SCI may also support periodic resource reservation. In an existing protocol, a periodic reservation mechanism may be activated or deactivated in a unit of a resource pool.

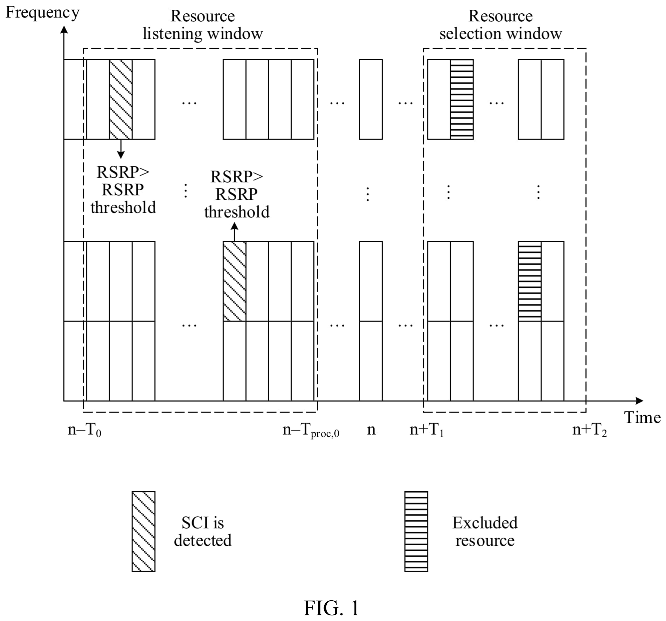

A current resource selection method is shown in FIG. 1. If a UE triggers resource selection in a slot n, the UE performs resource listening in a resource listening window, and a time range of the resource listening window is $[n-T_0, n-T_{proc,0})$. The UE selects a resource in a resource selection window based on a listening result, and a time range of the resource selection window is $[n+T_1, n+T_2]$. The following describes a resource listening and resource selection process of the UE.

First, the UE determines, in a resource pool used by the UE to send SL information, a resource set A in the resource selection window based on a quantity of subchannels needed for PSSCH transmission. The resource set A is a candidate resource set of the UE. A quantity of subchannels occupied in frequency domain by each available resource included in the resource set A is the quantity of subchannels needed for PSSCH transmission. A quantity of available resources in the resource set A is denoted as E, and any available resource in the resource set A is denoted as $R_{(x,y)}$, where $x$ represents a frequency domain position of a start subchannel of the resource, and y represents a time domain position of the resource. Assuming that a quantity that is of subchannels needed for PSSCH transmission and that is configured by a higher layer is L, $R_{(x,y)}$ represents a resource from a subchannel x to a subchannel x+L-1 in a slot y.

Then, the UE needs to determine, based on the listening result in the resource listening window, whether $R_{(x,y)}$ has been reserved by another UE. In addition, if periodic resource reservation is allowed, the UE further needs to determine, based on a resource reservation periodicity (indicated by SCI that is to be sent or has been sent by the UE) of the UE, whether a resource corresponding to $R_{(x,y)}$ in next C-1 periodicities is reserved by the another UE (where a resource whose frequency domain position is the same as that of $R_{(x,y)}$ in each of the C-1 periodicities and whose relative time domain position in the periodicity is the same as a relative time domain position of $R_{(x,y)}$ in a corresponding periodicity is the resource corresponding to $R_{(x,y)}$), where C is determined based on a random count value generated by the UE.

Specifically, if the UE obtains SCI from the another UE through listening in the resource listening window, the UE may measure SL-reference signal received power (reference signal received power, RSRP) corresponding to the SCI. If the measured SL-RSRP is greater than an RSRP threshold, the UE determines, based on a resource reserved by using the SCI, whether to exclude a candidate resource in the resource set A. For example, in FIG. 1, a box shown by using slashes in the resource listening window represents SCI whose corresponding SL-RSRP is greater than the threshold, and the UE may exclude a corresponding resource in the resource selection window. If periodic reservation is not allowed, the UE mainly determines whether a retransmission resource reserved by using the SCI overlaps $R_{(x,y)}$ and C-1 resources corresponding to $R_{(x,y)}$. If the retransmission resource reserved by using the SCI overlaps $R_{(x,y)}$ and the C-1 resources corresponding to $R_{(x,y)}$, the UE excludes $R_{(x,y)}$. If periodic resource reservation is allowed, in addition to determining whether the retransmission resource reserved by using the SCI overlaps $R_{(x,y)}$ and the C-1 resources corresponding to $R_{(x,y)}$, the UE further needs to consider Q slots that may be reserved by using the SCI for subsequent transmission. The Q slots may be determined by using a slot m for receiving the SCI as a reference point and by using a resource reservation periodicity corresponding to the SCI as an interval, where Q is related to a value of the resource reservation periodicity corresponding to the SCI and an upper limit T2 of the resource selection window. For example, Q is equal to 1 or 2. The UE needs to determine whether there is a resource in current transmission resources and retransmission resources in Q+1 slots overlapping $R_{(x,y)}$ and/or the C-1 resources corresponding to $R_{(x,y)}$. If there is a resource in the current transmission resources and the retransmission resources in the Q+1 slots overlapping $R_{(x,y)}$ and/or the C-1 resources corresponding to $R_{(x,y)}$, the UE excludes $R_{(x,y)}$. Particularly, considering a half-duplex limitation of the UE, the UE cannot simultaneously send and receive a signal. If the UE does not perform resource listening in some slots of the resource listening window because the UE needs to send the signal, the UE considers that resources corresponding to the slots need to be excluded. In addition, the UE determines, based on values of all resource reservation periodicities in a resource pool configuration, resources corresponding to the resources, and excludes these corresponding resources.

After the foregoing resource exclusion process, if a quantity of remaining resources in the resource set A is less than X×E, the UE may increase the RSRP threshold by 3 dB, and reperform the foregoing resource exclusion process until the quantity of remaining resources in the resource set A is greater than or equal to X×E. X is configured or preconfigured in a unit of a resource pool. For example, X=20%. E represents the quantity of available resources in the resource set A.

Finally, the resource set A is referred to as a resource set B after resource exclusion, and the UE may randomly select a transmission resource from the resource set B.

It can be learned from the foregoing resource exclusion process that currently, the UE excludes only a resource indicated by the SCI of the another UE, or it is understood as excluding a resource (including a retransmission resource indicated by the SCI, or including the retransmission resource indicated by the SCI and a periodically reserved resource) reserved by using the SCI of the another UE. However, for any UE A, in addition to interference that may be caused by transmission on a resource reserved by another UE to the UE A, transmission on a resource adjacent to the resource reserved by the another UE may also cause interference to the UE A.

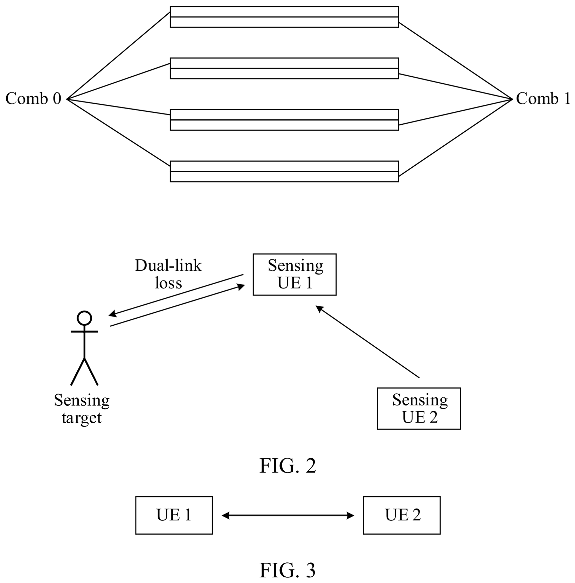

As shown in FIG. 2, two sensing UEs occupy different frequency domain resources in a comb manner. A sensing UE 1 occupies a comb 0 to send an SL sensing reference signal, and a sensing UE 2 occupies a comb 1 to send an SL sensing reference signal. In FIG. 2, that the sensing UE 1 performs self-sending and self-receiving is used as an example. A user in FIG. 2 represents a sensing target of the sensing UE 1. Although the frequency domain resources used by the sensing UE 1 and the sensing UE 2 do not overlap, the two frequency domain resources belong to a same radio frequency bandwidth/bandwidth part (bandwidth part, BWP)/resource pool. When receiving an echo of the SL sensing reference signal sent by the sensing UE 1, the sensing UE 1 also receives the SL sensing reference signal from the sensing UE 2. In this case, the echo is a target signal of the sensing UE 1, and the SL sensing reference signal of the sensing UE 2 is an interference signal for the sensing UE 1. In comparison with the target signal, when received power of the interference signal is excessively high, an analog-to-digital converter (analog-to-digital converter, ADC) blocking phenomenon may occur, that is, the target signal is almost completely overwhelmed by the interference signal. For example, after the target signal and the interference signal are quantized by an ADC of the sensing UE 1, the target signal occupies less than 1 bit. Consequently, all target signals are quantized to 0. In addition, even if the ADC blocking phenomenon does not occur, from a perspective of reception of the sensing UE 1, ADC quantization noise and inter-carrier interference (inter-subcarrier interference, ICI) caused by phase noise increase as the power of the interference signal from the sensing UE 2 increases. In addition to interference between the sensing UEs, similar interference also occurs between communication UEs, or between the sensing UE and the communication UE. Compared with the communication UE, the sensing UE performing self-sending and self-receiving may be more easily affected by the foregoing interference. This is because the echo received by the sensing UE undergoes a dual-link loss of sending and receiving, while the received interference signal undergoes only a single-link loss of receiving, and in this case, a case in which the power of the interference signal is much higher than that of the target signal is more likely to occur.

It can be learned that transmission on the resource adjacent to the resource reserved by the another UE may cause the interference to the UE A. Consequently, transmission quality of the UE is reduced.

In view of this, in embodiments of this application, a first UE may exclude, based on a first threshold list, a resource adjacent to a resource indicated by SCI of another UE, thereby reducing interference between the UEs to a greater extent, and improving information transmission quality.

The technical solutions provided in embodiments of this application may be applied to a 4th generation (4th generation, 4G) mobile communication technology system, for example, a long term evolution (long term evolution, LTE) system, may be applied to a 5G system, for example, a new radio (new radio, NR) system, or may be applied to a next generation mobile communication system or another similar communication system, for example, a 6th generation (6th generation, 6G) mobile communication technology system. This is not specifically limited. In addition, the technical solutions provided in embodiments of this application may be applied to a D2D scenario, for example, an NR-D2D scenario, or may be applied to a V2X scenario, for example, an NR-V2X scenario. For example, the technical solutions may be applied to fields such as factory manufacturing, whole-house intelligence, intelligent driving, assisted driving, or intelligent connected vehicles.

FIG. 3 shows a communication network architecture to which an embodiment of this application is applicable. FIG. 3 includes a UE 1 and a UE 2. A communication scenario in embodiments of this application may further include more or fewer UEs. The two UEs in FIG. 3 are merely used as an example. The UE 1 and/or the UE 2 may be sensing devices/a sensing device or communication devices/a communication device, and types of the two UEs may be the same or different. The UE 1 and/or the UE 2 may be located outside coverage of an access network device, or may be located within the coverage of the access network device. The UE 1 can communicate with the UE 2 through an SL. For example, the UE 1 can receive SCI from the UE 2, and/or the UE 2 can receive SCI from the UE 1. In addition to communicating with the UE 2, the UE 1 may further communicate with another UE. This is the same for the UE 2. Transmission of the UE 1 may cause interference to the UE 2, and/or transmission of the UE 2 may cause interference to the UE 1.

To better describe embodiments of this application, the following describes, with reference to the accompanying drawings, a method provided in embodiments of this application. Unless otherwise specified in the following, a UE (for example, a first UE or a second UE) described in embodiments of this application may be a sensing device, or may be a communication device. In embodiments of this application, a "resource" may include a time domain resource and/or a frequency domain resource. Because this specification mainly relates to the frequency domain resource, unless otherwise specified in the following, descriptions of the resource are mainly descriptions of the frequency domain resource included in the resource. For example, a first resource in the following may actually include a time domain resource and/or a frequency domain resource. This specification mainly describes the frequency domain resource included in the first resource. For example, in the following, that the first resource includes a subchannel may be understood as that the frequency domain resource of the first resource includes the subchannel. For another example, in the following, that two resources are adjacent may mean that frequency domain resources included in the two resources are adjacent. The time domain resource is, for example, a slot (slot), a mini-slot (mini-slot), an orthogonal frequency division multiplexing (orthogonal frequency division multiplexing, OFDM) symbol (symbol) group, or an OFDM symbol. In the following descriptions, an example in which a minimum time domain unit for resource allocation is a slot is used. In actual application, the minimum time domain unit may alternatively be a mini-slot, an OFDM symbol group, an OFDM symbol, or the like. The frequency domain resource is, for example, a subchannel (subchannel), an interlace (interlace), an interlace group, or a resource block (resource block, RB) set (set). The subchannel may be a plurality of consecutive physical resource blocks (physical resource blocks, PRBs) in frequency domain. For example, 10 consecutive PRBs are one subchannel, or 100 consecutive PRBs are one subchannel.

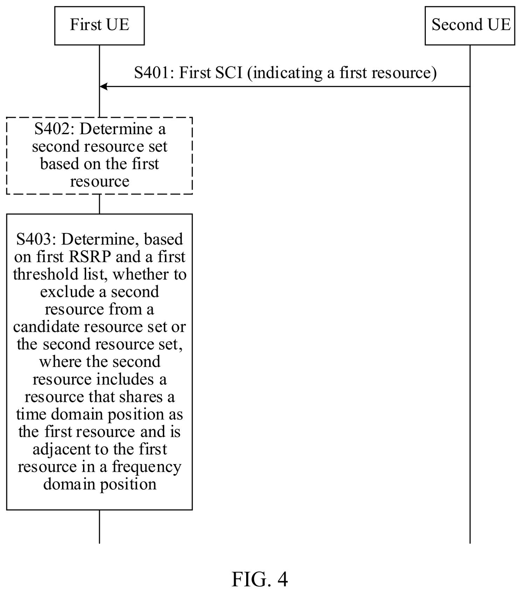

An embodiment of this application provides a resource exclusion method. FIG. 4 is a flowchart of the method. A step represented by dashed lines in the flowchart is an optional step. The method provided in this embodiment of this application may be applied to the network architecture shown in FIG. 3. For example, a first UE in this embodiment of this application may be the UE 1 in FIG. 3, and a second UE in this embodiment of this application may be the UE 2 in FIG. 3.

S401: The second UE sends first SCI. Correspondingly, the first UE receives the first SCI from the second UE.

For example, if the first UE triggers resource selection in a slot n, the first UE may determine a candidate resource set in a resource selection window. A resource exclusion process currently performed by the first UE is to, for example, select a resource from a first resource pool. In this case, the candidate resource set may belong to the first resource pool. In addition, the first UE may detect SCI in a resource listening window (or referred to as a resource sensing window). For example, the first UE receives the first SCI in the resource listening window (or referred to as the resource sensing window). The resource listening window is a time window used by the first UE to perform resource exclusion (or resource selection). Therefore, the second UE may not know existence of the resource listening window, and the first UE receives the first SCI in the resource listening window.

The first SCI is, for example, first-order SCI or second-order SCI. The first SCI may indicate one or more resources, and the one or more resources may include a first resource. The resource indicated by the first SCI may also be understood as a resource reserved by using the first SCI, includes, for example, a resource used for initial transmission and/or retransmission, and may further include a periodically reserved resource and the like. Similar processing may be performed, according to the method in this embodiment of this application, on a resource that is other than the first resource and that is indicated by the SCI. Details are not described one by one.

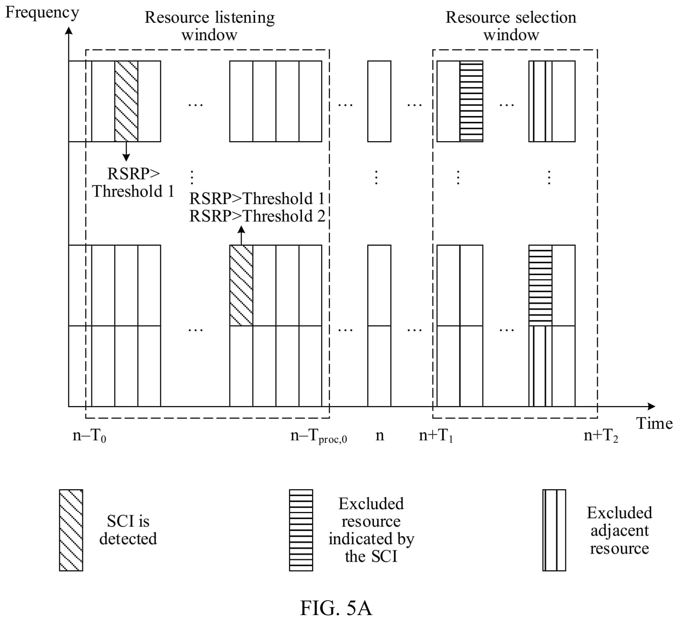

At least one resource pool may be configured for the first UE, or the first UE may support at least one resource pool, and the first resource pool is one of the at least one resource pool. The resource exclusion process currently performed by the first UE is to select the resource from the first resource pool in the at least one resource pool. Therefore, optionally, the first UE may perform listening only in the first resource pool in the resource listening window. For example, the first UE receives the first SCI in the first resource pool. For example, FIG. 5A is a diagram in which the first UE performs resource listening in the first resource pool and performs resource exclusion in the first resource pool.

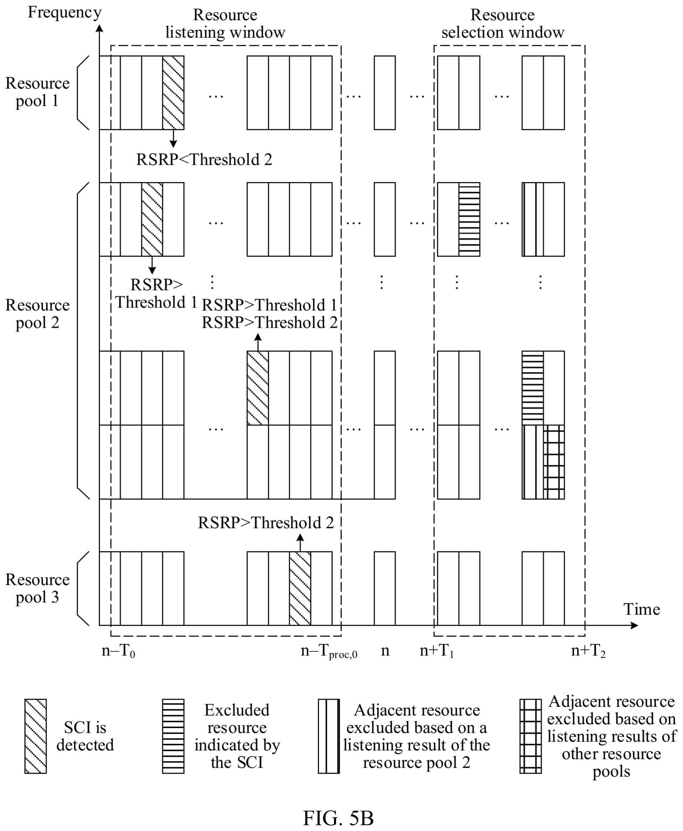

Alternatively, considering that there may be interference between different resource pools, the first UE may perform joint listening in a plurality of resource pools. The plurality of resource pools may be a part or all of the at least one resource pool. For example, the first UE receives the first SCI in one of the plurality of resource pools. For example, a plurality of resource pools may be defined in one BWP, and frequency division multiplexing may be performed on the plurality of resource pools. When receiving a signal, a UE having a capability of supporting a large bandwidth may use the BWP as a signal detection range. In this case, there may be interference between different resource pools. Therefore, the first UE may perform listening in the resource listening window in a part or all of resource pools supported by the first UE, or the first UE may receive SCI from another UE in the resource listening window in the part or all of the resource pools supported by the first UE, to reduce interference between resource pools as much as possible. However, regardless of a quantity of resource pools in which the first UE performs listening, the first UE may perform resource exclusion only in the first resource pool. For example, FIG. 5B is a diagram in which the first UE performs resource listening in a plurality of resource pools (for example, including a resource pool 1, a resource pool 2, and a resource pool 3) and performs resource exclusion in the first resource pool (for example, the resource pool 2 in FIG. 5B). In both FIG. 5A and FIG. 5B, an example in which a resource is a subchannel is used. A rectangular box in FIG. 5A or FIG. 5B represents a subchannel in frequency domain.

S402: The first UE determines a second resource set based on the first resource.

For example, the first UE may obtain RSRP corresponding to the first SCI, and the RSRP is referred to as first RSRP. The first UE may determine, based on the first RSRP and a fifth threshold, whether to exclude the first resource from the candidate resource set. A candidate resource set obtained by performing the foregoing exclusion process is the second resource set. It may be understood as that the second resource set is a set obtained by excluding, from the candidate resource set, a resource indicated by SCI and not excluding a frequency domain resource adjacent to the resource indicated by the SCI. Optionally, the first UE may receive SCI from a plurality of UEs in the resource listening window, the plurality of UEs include the second UE, and the second resource set may be determined based on resources indicated by the SCI from the plurality of UEs. For example, for each resource in the candidate resource set, the first UE determines whether there is received SCI indicating the resource, determines whether there is a resource indicated by the received SCI overlapping the resource, determines whether there is a resource indicated by the received SCI overlapping the resource and subsequent C-1 periodic resources corresponding to the resource, or determines whether there is a resource indicated by the received SCI and Q periodic resources that may be reserved overlapping the resource and the subsequent C-1 periodic resources corresponding to the resource. That the first UE determines whether there is received SCI indicating the resource is used as an example. If there is received SCI indicating the resource, the first UE may determine, based on RSRP corresponding to the SCI and the fifth threshold, whether to exclude the resource. A candidate resource set obtained by performing the exclusion process on each resource in the candidate resource set is the second resource set.

Optionally, considering a half-duplex limitation of the UE, the UE cannot simultaneously send and receive a signal. If the UE does not perform resource listening in some slots of the resource listening window because the UE needs to send the signal, the UE considers that resources corresponding to the slots need to be excluded from the candidate resource set. The UE determines, based on values of all resource reservation periodicities configured by using resource pool configuration information, the resources corresponding to the slots in the candidate resource set, and excludes the resources corresponding to the slots from the candidate resource set. That is, the first UE may determine the second resource set based on the received SCI, or the first UE may determine the second resource set based on the received SCI and a half-duplex limitation status.

The first UE determines, based on the first RSRP and the fifth threshold, whether to exclude the first resource from the candidate resource set. In an implementation, if the first RSRP is greater than the fifth threshold, the first UE may exclude the first resource from the candidate resource set. Alternatively, if the first RSRP is less than or equal to the fifth threshold, the first UE may not need to exclude the first resource from the candidate resource set.

There may be different manners in which the first UE obtains the first RSRP. For example, the first UE measures information corresponding to the first SCI, to obtain second RSRP, and the second RSRP may be used as the first RSRP. For another example, the first UE measures information corresponding to the first SCI, to obtain second RSRP, and then may obtain the first RSRP based on the second RSRP and interference processing information of the first UE. The interference processing information includes, for example, one or more of the following: target received power, an ADC quantization noise formula, an in-band emission mask, a phase noise model, or a power amplifier (power amplifier, PA) non-linear model. If the first UE obtains the first RSRP based on the second RSRP and the interference processing information, and information obtained by the first UE may also be referred to as first power, for example, power obtained by the first UE by inputting the second RSRP into the in-band emission mask, the first RSRP (first power) may be considered as power of interference caused to the first UE. Certainly, the first power may be the second RSRP in most cases, and the second RSRP may be referred to as the first RSRP or may be referred to as the first power.

There may be a plurality of implementations in which the first UE measures the information corresponding to the first SCI, to obtain the second RSRP. In SL communication, if a channel carrying SCI is a PSCCH, and a channel carrying data is a PSSCH, PSCCH-RSRP may be used as the second RSRP, or PSSCH-RSRP may be used as the second RSRP. The PSCCH-RSRP is defined as a linear average value of power on resource elements (resource elements, REs) carrying PSCCH DMRSs, and the first UE may measure a DMRS carried on a PSSCH on which the first SCI is located, to obtain the PSCCH-RSRP. The PSSCH-RSRP is defined as a linear average value of power on REs carrying PSSCH DMRSs, and the first UE may measure a DMRS carried on a PSSCH scheduled by using the first SCI, to obtain the PSSCH-RSRP. Whether to use the PSCCH-RSRP obtained through measurement or the PSSCH-RSRP obtained through measurement as the second RSRP may depend on a resource pool configuration of the first UE.

In addition, in SL sensing or SL positioning, the SCI may be used to schedule only a data signal, schedule only an SL sensing reference signal (SL sensing reference signal, SL-SRS) or an SL positioning reference signal (SL positioning reference signal, SL-PRS), or schedule both the data signal and the SL sensing reference signal (or the SL positioning reference signal). Because a larger bandwidth indicates higher sensing/positioning accuracy, a bandwidth used to send the SL sensing reference signal/SL positioning reference signal may be much larger than a bandwidth used to send the SCI/data signal. In addition, a comb structure is usually used for the SL sensing reference signal/SL positioning reference signal. If the PSCCH-RSRP or the PSSCH-RSRP is measured, an obtained measurement result may fail to accurately reflect an actual channel characteristic of the SL sensing reference signal/SL positioning reference signal. If the PSCCH-RSRP or the PSSCH-RSRP is directly used as the second RSRP, interference between SL sensing reference signals/SL positioning reference signals may fail to be avoided. Therefore, another implementation in which the first UE obtains the second RSRP includes: The first UE may measure the DMRS carried on the PSSCH scheduled by using the first SCI, to obtain the PSSCH-RSRP. In this case, the PSSCH-RSRP is referred to as third RSRP, and the first UE may obtain the second RSRP based on the third RSRP and a power difference. Alternatively, still another implementation in which the first UE obtains the second RSRP includes: The first UE may measure the DMRS carried on the PSCCH on which the first SCI is located, to obtain the PSCCH-RSRP. In this case, the PSCCH-RSRP is referred to as third RSRP, and the first UE may obtain the second RSRP based on the third RSRP and a power difference. The power difference may be represented as $\triangle P$, and $\triangle P$ may be preconfigured in the first UE, may be configured by using resource pool configuration information, or may be indicated by SCI, for example, indicated by the first SCI in S401.

Optionally, $\triangle P$ represents a difference between EPRE (energy per resource element) of a sensing reference signal (sensing reference signal, SRS)/positioning reference signal (positioning reference signal, PRS) and EPRE corresponding to a PSCCH/PSSCH, that is, $\triangle P = \text{EPRE}_{SRS/PRS} - \text{EPRE}_{PSCCH/PSSCH}$. The sensing reference signal includes, for example, the SL sensing reference signal, and the positioning reference signal includes, for example, the SL positioning reference signal. $\text{EPRE}_{SRS/PRS}$ represents energy on each RE carrying the SRS/PRS, and $\text{EPRE}_{PSCCH/PSSCH}$ represents energy on each RE occupied by the PSCCH/PSSCH. A specific value of $\triangle P$ is related to a power control manner. For example, if same transmit power is used on each orthogonal frequency division multiplexing (orthogonal frequency division multiplexing, OFDM) symbol (symbol), $\triangle P = M_{PSCCH/PSSCH} \times \text{Comb}/M_{SRS/PRS}$. $M_{PSCCH/PSSCH}$ represents a quantity of PRBs occupied by the PSCCH/PSSCH, $M_{SRS/PRS}$ represents a quantity of PRBs occupied by the SRS/PRS, and Comb represents a quantity of combs used for the SRS/PRS. Alternatively, if all REs have same emitted energy, $\triangle P = 1$. Alternatively, if transmit signals have same power spectral density (power spectral density, PSD), $\triangle P = 1/\text{Comb}$.

Alternatively, the first UE may not measure the DMRS carried on the PSSCH or the DMRS carried on the PSCCH, but measure other information corresponding to the first SCI, to obtain the second RSRP. For example, still another implementation in which the first UE obtains the second RSRP includes: The first UE measures a signal scheduled by using the first SCI, to obtain the second RSRP. The signal scheduled by using the first SCI may include, for example, one or more of the SL sensing reference signal or the SL positioning reference signal. That is, the second RSRP may be a linear average value of power on REs carrying signals scheduled by using the first SCI.

For another example, yet another implementation in which the first UE obtains the second RSRP includes: The first UE measures the first SCI, to obtain the second RSRP. For example, the second UE is a sensing UE. For a sensing UE without a communication module like a modulation/demodulation module or an encoding/decoding module, SCI sent by the sensing UE may be SCI (seq-SCI) in a sequence form, that is, information carried in the SCI is carried by using a sequence. Therefore, a linear average value of power on REs carrying sequences may be used as the second RSRP.

Optionally, regardless of how the first UE obtains the second RSRP, during RSRP measurement, for a purpose of privacy protection, the first UE may fail to learn of a reference sequence used by the second UE to generate the first SCI, or fail to learn of a reference sequence used by the second UE to generate the SL sensing reference signal or the SL positioning reference signal. In this case, when measuring the first SCI, the first UE may determine the second RSRP by using a reference sequence of the first UE. For example, the first UE may perform a cross-correlation operation based on the reference sequence of the first UE. Alternatively, a code domain resource is further considered, and reference sequences used by different UEs may be orthogonal. Therefore, when measuring the first SCI, the first UE may determine the second RSRP by using a reference sequence of the first UE. For example, the first UE may perform a cross-correlation operation based on the reference sequence of the first UE.

The following describes how the first UE obtains the fifth threshold. For example, the first UE may determine the fifth threshold based on a third priority corresponding to the first UE and a fourth priority indicated by the first SCI. The fourth priority indicated by the first SCI is a priority corresponding to the second UE. For example, the first UE obtains a fourth mapping relationship through network configuration, preconfiguration, or the like. The fourth mapping relationship includes a mapping relationship between $(prio_{RX}, prio_{TX})$ and the fifth threshold. The first UE may determine the fifth threshold based on $prio_{RX}$ and $prio_{TX}$ by querying the fourth mapping relationship. $prio_{RX}$ represents the fourth priority corresponding to the second UE, and $prio_{TX}$ represents the third priority corresponding to the first UE. For example, an existing protocol specifies 66 optional fifth thresholds: negative infinity, -128 dBm, -126 dBm, -124 dBm, ..., 0 dBm, and positive infinity.

If a signal to be sent by the first UE is a communication signal (for example, a data signal), the third priority may be a priority of a logical channel to be used for transmission of the communication signal. Alternatively, if a signal to be sent by the first UE is an SL sensing reference signal, the third priority may be a priority of the SL sensing reference signal. Alternatively, if a signal to be sent by the first UE is an SL positioning reference signal, the third priority may be a priority of the SL positioning reference signal. Alternatively, if a signal to be sent by the first UE includes a communication signal and an SL sensing reference signal (or an SL positioning reference signal), the third signal priority may be a higher one of a priority of a logical channel to be used for transmission of the communication signal and a priority of the SL sensing reference signal (or the SL positioning reference signal), or the third priority may include the priority of the logical channel to be used for transmission of the communication signal and the priority of the SL sensing reference signal (or the SL positioning reference signal). Similarly, if a signal scheduled by using the first SCI is a communication signal (for example, a data signal), the fourth priority may be a priority of a logical channel to be used for transmission of the communication signal. Alternatively, if a signal scheduled by using the first SCI is an SL sensing reference signal, the fourth priority may be a priority of the SL sensing reference signal. Alternatively, if a signal scheduled by using the first SCI is an SL positioning reference signal, the fourth priority may be a priority of the SL positioning reference signal. Alternatively, if a signal scheduled by using the first SCI includes a communication signal and an SL sensing reference signal (or an SL positioning reference signal), the fourth priority may be a higher one of a priority of a logical channel to be used for transmission of the communication signal and a priority of the SL sensing reference signal (or the SL positioning reference signal), or the fourth priority may include the priority of the logical channel to be used for transmission of the communication signal and the priority of the SL sensing reference signal (or the SL positioning reference signal).

It can be learned that the first UE needs to know the third signal priority and the fourth priority, to determine the fifth threshold. The fourth priority may be obtained by using the SCI, and the third priority may be obtained in a plurality of different manners.

Optionally, a manner in which the first UE obtains the third priority includes: A network device sends second information, where the second information may indicate the third priority. After receiving the second information from the network device, the first UE can determine the third priority. The second information may be included in a first message. The first message is, for example, dedicated signaling. For example, the first message is an RRC reconfiguration (RRC reconfiguration) message, or may be another message. If the first UE is in a radio resource control (radio resource control, RRC) connected (connected) state, the third priority may be determined in this manner, and the network device is, for example, an access network device serving the first UE. Optionally, the network device may determine the third priority based on quality of service (quality of service, QoS) information of a service, where the QoS information is, for example, QoS information needed for a service executed by the first UE. Therefore, before the network device sends the first message to the first UE, the network device may obtain the QoS information. For example, the network device obtains the QoS information from a device like the first UE, an AMF, or a sensing management function. For example, the network device obtains the QoS information from the first UE. The first UE may send a second message to the network device. The second message is, for example, an RRC message or a message of another protocol layer. The second message may indicate a QoS requirement of the service executed by the first UE, or indicate the QoS information of the service executed by the first UE. The service includes, for example, one or more of a communication service, a positioning service, or a sensing service. For example, the network device stores a mapping relationship between the QoS information and the third priority. In this case, the network device can determine the third priority based on the mapping relationship after receiving the second message. Alternatively, for example, the network device obtains the QoS information from the AMF or the sensing management function. In this case, the AMF or the sensing management function may send a second message to the network device. For example, the service executed by the first UE is a sensing service. In this case, the second message is, for example, a message related to a sensing protocol. If the network device obtains the QoS information from the first UE, the first UE may obtain the QoS information in a plurality of different manners. For example, if the service executed by the first UE is initiated by the first UE, and the first UE knows the QoS requirement of the first UE, the first UE may independently determine the QoS information. Alternatively, if the service executed by the first UE is triggered by a network, the first UE may obtain the QoS information from a network side. For example, a device like the AMF or the sensing management function may send the QoS information to the first UE.

Alternatively, another manner in which the first UE obtains the third priority includes: The first UE receives second information from the network device, where the second information includes a first mapping relationship, so that the first UE can determine the third priority based on the first mapping relationship. The first mapping relationship includes, for example, a mapping relationship between QoS information of a service and the third priority. For example, when the first UE is in an RRC idle (idle) state, the third priority may be obtained in this manner. The first mapping relationship may be included in a third message sent by the network device. The third message is, for example, common signaling, for example, a broadcast message (for example, a system message or another broadcast message). Optionally, the third message may further indicate a default priority. If the first mapping relationship includes the QoS information of the first UE, the first UE may determine the third priority corresponding to the QoS information in the first mapping relationship; or if the first mapping relationship does not include the QoS information of the first UE, the first UE may determine that the default priority is the third priority.

Alternatively, still another manner in which the first UE obtains the third priority includes: The first UE obtains a preconfigured or predefined first mapping relationship, to determine the third priority based on the first mapping relationship. For example, when the first UE is located outside network coverage, the third priority may be obtained in this manner. The first mapping relationship may be preconfigured in the first UE, may be configured by a higher layer (for example, a MAC layer) of the first UE, may be predefined in a protocol, or the like. Optionally, the first mapping relationship may further include a default priority. If the first mapping relationship includes QoS information of the first UE, the first UE may determine the third priority corresponding to the QoS information in the first mapping relationship; or if the first mapping relationship does not include QoS information of the first UE, the first UE may determine that the default priority is the third priority.

Optionally, for the communication service, QoS information corresponding to the communication service may include one or more of a resource type, a QoS flow priority, a packet delay budget (packet delay budget, PDB), a packet error rate (packet error rate, PER), an averaging window, or a maximum data burst volume. For the positioning service, QoS information corresponding to the positioning service may include one or more of horizontal accuracy, vertical accuracy, response time, a location service (location service, LCS) QoS class, or schedulable positioning accuracy. For the sensing service, QoS information corresponding to the sensing service may include one or more of parameters of horizontal accuracy, vertical accuracy, Doppler accuracy, response time, a distance from a sensing target, a speed of the sensing target, a detection probability, a false alarm probability, a missed alarm probability, a sensing resolution, a quality of service class of a sensing server, a PC5 5G quality of service identifier (PC5 5G QoS identifier, PQI), a flow bit rate, an aggregate bit rate, a resource type, a QoS flow priority, a PDB, a PER, an averaging window, a maximum data burst volume, and the like.

If the first mapping relationship includes a mapping relationship between the QoS information of the sensing service and the third priority, the first mapping relationship may include one or more of the following characteristics: Higher sensing accuracy (for example, one or more of the horizontal accuracy, the vertical accuracy, or the Doppler accuracy) corresponds to a higher third priority; shorter response time corresponds to a higher third priority; or a longer distance from the sensing target corresponds to a higher third priority.

S403: The first UE determines, based on the first RSRP and a first threshold list, whether to exclude a second resource from the candidate resource set or the second resource set. A candidate resource set or a second resource set obtained by performing the exclusion process may be referred to as a first resource set, and the first UE may select a resource from the first resource set to send SL information.

The second resource includes a resource that shares a same time domain position as that the first resource and is adjacent to the first resource in a frequency domain position. Adjacency of the frequency domain positions may include direct adjacency and/or indirect adjacency. The second resource may include M resources, and M is an integer greater than or equal to 0. Optionally, the M resources and the first resource may be within a first bandwidth range, and the first bandwidth range may be a signal detection range supported by the first UE. In other words, the first UE may perform resource exclusion within the signal detection range supported by the first UE.

This is equivalent to that, in this embodiment of this application, in addition to excluding a resource indicated by SCI from another UE, the first UE may further exclude, based on the first threshold list, a resource adjacent to the resource, thereby reducing interference between the UEs to a greater extent, and improving information transmission quality.

For example, after obtaining the second resource set, the first UE may compare the first RSRP with the first threshold list, to determine, based on a comparison result, whether to exclude the second resource from the second resource set. The first threshold list may include one or more thresholds, and the one or more thresholds are RSRP values. For example, the first threshold list may also be referred to as a first threshold set.

As described above, the first UE may measure the information corresponding to the SCI, to obtain the second RSRP, and then may obtain the first power based on the second RSRP and the interference processing information of the first UE. Optionally, in this case, the first threshold list may include only one threshold, and the threshold may represent maximum tolerable interference power of the first UE. For example, the threshold may be determined based on capability information of the first UE and/or the QoS information of the first UE. The threshold and the first RSRP may represent a same physical quantity, for example, both represent power (interference power) of an interference signal, or both represent power of a received signal received by the first UE from the second UE. Optionally, interference caused by transmission of one UE to an adjacent frequency domain resource is not necessarily caused by adjacent band leakage, for example, may be caused by a factor like ADC quantization noise. Therefore, the interference caused by transmission of the UE to the adjacent frequency domain resource may fail to be obtained by measuring, in a resource listening window, a received signal on a frequency domain resource adjacent to a resource occupied by the UE. Therefore, in this embodiment of this application, the RSRP obtained through measurement may be converted, by using the interference processing information, into power of interference caused to an adjacent resource, so that interference caused by transmission of another UE to the adjacent resource can be represented.

When the first threshold list includes only one threshold, the fifth threshold may be equal to the threshold. For example, the fifth threshold and the threshold are a same threshold. Alternatively, the fifth threshold may not be equal to the threshold. Alternatively, when the first threshold list includes a plurality of thresholds, a threshold in the first threshold list may be equal to the fifth threshold, or any threshold in the first threshold list is not equal to the fifth threshold. Optionally, if the fifth threshold is not equal to any threshold in the first threshold list, the fifth threshold may be less than the threshold in the first threshold list. If the first threshold list includes a plurality of thresholds, the fifth threshold may be less than a smallest threshold in the plurality of thresholds. Optionally, the fifth threshold may not be included in the first threshold list, or the fifth threshold may be included in the first threshold list. If the fifth threshold is not included in the first threshold list, the first UE may first determine a relationship between the first RSRP and the fifth threshold, for example, first determine, based on the first RSRP and the fifth threshold, whether to exclude the first resource. If the first RSRP is greater than the fifth threshold, a relationship between the first RSRP and the threshold included in the first threshold list is then determined. For example, if the first RSRP is greater than the fifth threshold, the first UE may exclude the first resource to obtain the second resource set, and then determine, based on the relationship between the first RSRP and the threshold included in the first threshold list, whether to exclude the second resource, to obtain the first resource set. Alternatively, if the fifth threshold is not included in the first threshold list, and the first UE determines that the first RSRP is less than or equal to the fifth threshold, the first UE does not need to determine the relationship between the first RSRP and the threshold included in the first threshold list, and does not need to perform a process of determining whether to exclude the second resource.

If the fifth threshold is included in the first threshold list, the first UE may not perform S402 (therefore, S402 is an optional step). In S403, the first UE may directly compare the first RSRP with the threshold in the first threshold list, to determine whether to exclude the first resource and/or the second resource from the candidate resource set. In S403 in FIG. 4, that the first UE determines whether to exclude the second resource is used as an example. In this manner, if the first UE needs to exclude the second resource from the candidate resource set, it also means that the first resource needs to be excluded. Therefore, S402 may not need to be separately performed, and the first resource and the second resource are excluded together in S403. For example, the fifth threshold is a smallest threshold in the first threshold list. If the first RSRP is greater than a threshold A in the first threshold list, it is clear that the first RSRP is greater than the fifth threshold. For a resource A in the candidate resource set, if the resource A overlaps the first resource and/or the second resource, the first UE may exclude the resource A from the candidate resource set. In this manner, a case in which the first UE needs to exclude the first resource from the candidate resource set but does not need to exclude the second resource is included. For example, if the first RSRP is greater than the fifth threshold (that is, the smallest threshold in the first threshold list) but less than or equal to all thresholds other than the fifth threshold in the first threshold list, for a resource A in the candidate resource set, if the resource A overlaps the first resource, the first UE may exclude the resource A from the candidate resource set. In this manner, the first UE may not obtain the second resource set, but directly obtain the first resource set. Optionally, if the first UE directly obtains the first resource set, the half-duplex limitation of the UE may be considered. For example, the first UE may determine the first resource set based on received SCI, or the first UE may determine the first resource set based on the received SCI and the half-duplex limitation status. For this, refer to the foregoing related descriptions of obtaining the second resource set.

The first UE determines, based on the first RSRP and the first threshold list, whether to exclude the second resource from the candidate resource set or the second resource set. In an implementation, if the first RSRP is greater than at least one threshold in the first threshold list, the first UE may exclude the second resource from the candidate resource set or the second resource set; or if the first RSRP is less than or equal to the fifth threshold, the first UE may not need to exclude the second resource from the candidate resource set or the second resource set. Optionally, if the fifth threshold is included in the first threshold list, the at least one threshold does not include the fifth threshold.

For example, in FIG. 5A and FIG. 5B, a threshold 1 represents the fifth threshold, and a threshold 2 represents a threshold in the first threshold list (for example, the first threshold list includes only the threshold 2, or the first threshold list is {threshold 1, threshold 2}). The threshold 1 is less than the threshold 2. It can be learned that the first UE performs resource exclusion based on the two thresholds. FIG. 5A is used as an example. For a resource A in the candidate resource set, if the first UE receives SCI in the resource listening window, and RSRP obtained by measuring information corresponding to the SCI is greater than the threshold 1 and less than or equal to the threshold 2, the first UE may determine whether the resource A overlaps a resource indicated by the SCI. If the resource A overlaps the resource indicated by the SCI, the first UE excludes the resource A from the candidate resource set. If the resource A does not overlap the resource indicated by the SCI, the first UE does not exclude the resource A. Alternatively, if the RSRP obtained through measurement is greater than the threshold 2, the first UE may determine the second resource that shares a time domain position as the resource indicated by the SCI and is adjacent to the resource indicated by the SCI in a frequency domain position, and determine whether the resource A overlaps the resource indicated by the SCI and the second resource. If the resource A overlaps the resource indicated by the SCI and the second resource, the first UE may exclude the resource A from the candidate resource set. If the resource A does not overlap the resource indicated by the SCI or the second resource, the first UE does not exclude the resource A. For another resource in the candidate resource set, the first UE uses a similar processing manner.

For example, in FIG. 5A, the first UE detects two pieces of SCI in the resource listening window, and RSRP obtained by the first UE by measuring information corresponding to a 1st piece of SCI is greater than the threshold 1 but less than or equal to the threshold 2. Therefore, only a resource (shown by a rectangular box with horizontal lines in the upper part of the resource selection window) indicated by the SCI needs to be excluded from the candidate resource set, and an adjacent resource does not need to be excluded. For a 2nd piece of detected SCI, RSRP obtained by measuring information corresponding to the SCI is greater than the threshold 1 and greater than the threshold 2. Therefore, a resource (shown by a rectangular box with horizontal lines in the lower part of the resource selection window) indicated by the SCI may be excluded from the candidate resource set, and a resource (shown by a rectangular box with vertical lines on the right side of the resource selection window) adjacent to the resource indicated by the SCI may be excluded. For a resource B in the candidate resource set (a time domain resource included in the candidate resource set is in the resource selection window), the first UE may determine whether the resource B overlaps a resource indicated by detected SCI and/or overlaps a frequency domain resource adjacent to the resource indicated by the SCI. For example, the first UE may determine whether the resource B overlaps the resource indicated by the 1st piece of SCI. If the resource B overlaps the resource indicated by the 1st piece of SCI, the first UE excludes the resource B from the candidate resource set. If the resource B does not overlap the resource indicated by the 1st piece of SCI, the first UE does not exclude the resource B. For another example, if the first UE does not exclude the resource B based on the 1st piece of SCI, the first UE may further continue to determine, based on the 2nd piece of SCI, whether to exclude the resource B. For example, the first UE may determine whether the resource B overlaps the resource indicated by the 2nd piece of SCI and a frequency domain resource adjacent to the resource indicated by the 2nd piece of SCI. If the resource B overlaps the resource indicated by the 2nd piece of SCI and the frequency domain resource adjacent to the resource indicated by the 2nd piece of SCI, the first UE excludes the resource B from the candidate resource set. If the resource B does not overlap the resource indicated by the 2nd piece of SCI or the frequency domain resource adjacent to the resource indicated by the 2nd piece of SCI, the first UE does not exclude the resource B.

FIG. 5B is used as an example. For a resource A in the candidate resource set, if the first UE receives SCI in any resource pool in which listening is performed, and RSRP obtained by measuring information corresponding to the SCI is greater than the threshold 2, the first UE may determine the second resource that shares a time domain position as a resource indicated by the SCI and is adjacent to the resource indicated by the SCI in a frequency domain position. If the second resource overlaps the resource A, the first UE may exclude the resource A from the candidate resource set. For another resource in the candidate resource set, a similar processing manner is used. For example, in FIG. 5B, the first UE excludes, from the resource pool 2 based on a listening result in the resource pool 2, a resource (shown by a rectangle with horizontal lines in FIG. 5B) that overlaps a resource indicated by SCI obtained through listening in the resource pool 2, and excludes a resource (shown by a rectangle with vertical lines in FIG. 5B) that overlaps an adjacent resource of the resource indicated by the SCI obtained through listening in the resource pool 2. In addition, the first UE further excludes, from the resource pool 2 based on a listening result in the resource pool 3, a resource that overlaps an adjacent resource of a resource indicated by SCI obtained through listening in the resource pool 3 and that is shown by a grid rectangle in FIG. 5B. Because the resource indicated by the SCI obtained through listening in the resource pool 3 is generally still in the resource pool 3, in the resource pool 2, there may be no resource that overlaps the resource indicated by the SCI obtained through listening in the resource pool 3. However, the adjacent resource of the resource indicated by the SCI obtained through listening in the resource pool 3 may overlap a resource in the resource pool 2. Therefore, the first UE may exclude, from the resource pool 2, the resource that overlaps the adjacent resource of the resource indicated by the SCI obtained through listening in the resource pool 3. In FIG. 5A and FIG. 5B, an example in which the first UE does not obtain the second resource set but directly obtains the first resource set is used.

When the first threshold list is used for resource exclusion, M should be specified, or a value of M should be specified. In actual application, transmission of a signal at a frequency domain position may cause one or more types of interference, for example, ADC quantization noise interference, ICI, or in-band emission (in-band emission, IBE) interference caused by a frequency offset, to an adjacent frequency domain resource. A signal received by using a radio frequency is obtained through time-domain superimposition of all signals within a radio frequency bandwidth, and then ADC quantization is performed on the signal received by using the radio frequency. Therefore, ADC quantization noise is related to received power of a target UE (namely, a UE that performs resource selection or resource exclusion, for example, the first UE) for an interference signal, and is irrelevant to a frequency domain position of the interference signal after the interference signal is changed to a baseband. That is, the ADC quantization noise does not decrease as a frequency domain distance between two resources increases. The ICI caused by phase noise, the IBE interference caused by the frequency offset, or the like is not only related to received power of an interference signal, but also decreases as a frequency domain distance between resources increases. When resource exclusion is performed, overall interference caused to an adjacent frequency domain resource by a resource indicated by SCI may be considered. In general, a candidate resource in frequency domain farther from the resource indicated by the SCI is less likely to be excluded.

The first threshold list includes one or more thresholds. If the first threshold list includes a plurality of thresholds, differences between adjacent thresholds in the plurality of thresholds may be the same or different. Optionally, in the one or more thresholds, different thresholds may correspond to different M, or correspond to different values of M. In this case, the first threshold list may be considered as corresponding to an M list (a value list of M, which may be referred to as the M list for short) or an M set (a value set of M, which may be referred to as the M set for short). A quantity of pieces of M (or values of M) included in the M list or the M set is equal to a quantity of RSRP thresholds included in the first threshold list, and M included in the M list or the M set is in one-to-one correspondence with the threshold included in the first threshold list. The M list may be preconfigured in the UE, may be configured by a higher layer (for example, a media access control (media access control, MAC) layer) of the UE, may be configured by the network device or another UE, or may be included in resource pool configuration information.

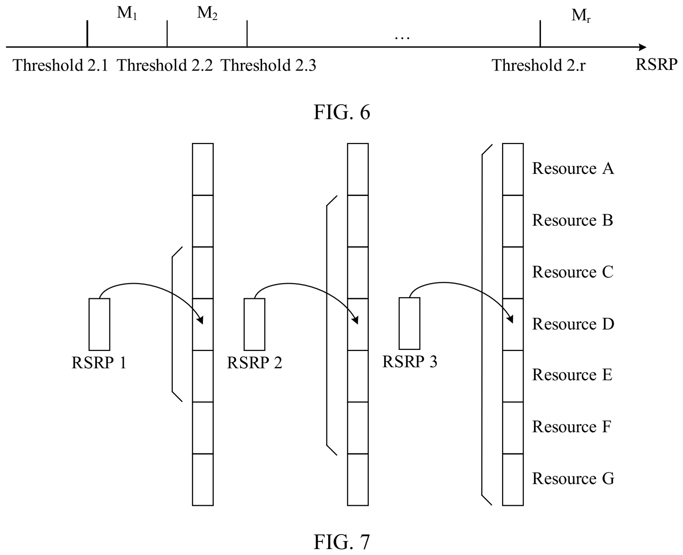

As described above, in the first threshold list, different thresholds may correspond to different M, or correspond to different values of M. For example, the first threshold list is {threshold 2.1, threshold 2.2, ..., threshold 2.r}, and an M list corresponding to these thresholds is {$M_1$, $M_2$, ..., $M_r$}. In the first threshold list, the thresholds may be arranged in ascending order: the threshold 2.1<the threshold 2.2<...<the threshold 2.r. In addition, a larger threshold may correspond to larger M. Therefore, $M_1 < M_2 < ... < M_r$. For example, as shown in FIG. 6, when the first RSRP is greater than the threshold 2.1 and less than or equal to the threshold 2.2, M=$M_1$; when the first RSRP is greater than the threshold 2.2 and less than or equal to a threshold 2.3, M=$M_2$; and when the first RSRP measurement result is greater than the threshold 2.r, M=$M_r$.

As described above, the fifth threshold may be included in the first threshold list. For example, the first threshold list is {threshold 1, threshold 2.1, threshold 2.2, ..., threshold 2.r}, where the threshold 1 is the fifth threshold. An M list corresponding to the first threshold list is {0, $M_1$, $M_2$, ..., $M_r$}. A value of M corresponding to the fifth threshold is 0. Alternatively, it is understood as that if the first RSRP is only greater than the fifth threshold and less than or equal to a threshold other than the fifth threshold in the first threshold list, the second resource does not need to be excluded. Optionally, if the fifth threshold is included in the first threshold list, the first UE may still obtain the fifth threshold according to the method described in S402. Other thresholds other than the fifth threshold included in the first threshold list are, for example, {threshold 2.1, threshold 2.2, ..., threshold 2.r}. For a method for obtaining the other thresholds by the first UE, refer to the following method for obtaining the first threshold list.

When resource exclusion is performed, if the first threshold list includes only one threshold, M corresponding to the threshold may be selected. If the first threshold list includes a plurality of thresholds, selecting M corresponding to a specific threshold may be related to the first RSRP. For example, the first threshold list includes at least two RSRP thresholds, the at least two thresholds include a first threshold and a second threshold, the first threshold is adjacent to the second threshold, and the second threshold is greater than the first threshold. In this case, if the first RSRP is greater than the first threshold and less than or equal to the second threshold, M resources corresponding to the first threshold are excluded from the candidate resource set or the second resource set. For example, in this case, M=$M_1$. Alterna-

tively, the at least two thresholds may further include a third threshold, where the third threshold is adjacent to the second threshold, and the third threshold is greater than the second threshold. In this case, if the first RSRP is greater than the second threshold and less than or equal to the third threshold, M resources corresponding to the second threshold are excluded from the candidate resource set or the second resource set. For example, in this case, $M=M_2$. For example, refer to FIG. 7. The first SCI in S401 indicates a resource D (the resource D is considered as a reserved resource of the second UE) in the candidate resource set. If the first RSRP is RSRP 1, a resource C and a resource E adjacent to the resource D upward and downward should be excluded from the candidate resource set or the second resource set, that is, in this case, M=2. Alternatively, if the first RSRP is RSRP 2, resources B, C, E, and F adjacent to the resource D upward and downward should be excluded, that is, in this case, M=4. Alternatively, if the first RSRP is RSRP 3, resources A, B, C, E, F, and G adjacent to the resource D upward and downward should be excluded, that is, in this case, M=6. The RSRP 1<the RSRP 2<the RSRP 3. It can be learned that M increases as the first RSRP increases. The resources A, B, C, E, F, and G are all considered as non-reserved resources of the second UE. For example, when the first RSRP is large enough, all frequency domain resources that are in the candidate resource set or the second resource set and that have a same time domain position as the first resource should be excluded. Otherwise, no matter which frequency domain resource at the time domain position is selected by the first UE to transmit the SL information, a phenomenon like ADC blocking is likely to occur. Based on the foregoing descriptions, in an example in FIG. 7, the resource D is excluded from the candidate resource set.

Alternatively, the first threshold list includes at least one threshold. In this case, if the first RSRP is greater than the third threshold in the at least one threshold, M resources corresponding to the third threshold are excluded. For example, in this case, $M=M_n$. The third threshold may be a last threshold in the at least one threshold. If a quantity of the at least one threshold is greater than 1, the last threshold in the at least one threshold may be a largest threshold in the at least one threshold. Alternatively, if a quantity of the at least one threshold is 1, the threshold may be considered as a $1^{st}$ threshold in the at least one threshold, and may also be considered as the last threshold in the at least one threshold, or may be considered as any threshold in the at least one threshold.

The first UE may obtain the first threshold list before S403. For example, the first UE may obtain first indication information, where the first indication information may indicate a first priority corresponding to the first UE, and/or indicate a third threshold list corresponding to the first UE, and the first UE may determine the first threshold list based on the first indication information. The third threshold list may be understood as a threshold list originally corresponding to the first UE, and the third threshold list includes an RSRP threshold used to exclude an adjacent resource. An original threshold list of a UE may also be understood as a threshold list including one or more RSRP thresholds used by the UE to exclude an adjacent resource. For example, the original threshold list of the first UE may be understood as a threshold list including one or more RSRP thresholds used by the first UE to exclude the adjacent resource. Understanding of an original threshold list of the second UE may be similar. Optionally, in a manner in which the first indication information indicates the third threshold list, the first indication information includes the third threshold list, or includes information such as an index or an identifier of the third threshold list.

For example, the first UE may obtain the first indication information when obtaining the fifth threshold. For example, in addition to indicating the third priority, the second information may further indicate (or include) the first indication information. Alternatively, the first mapping relationship may include a mapping relationship between the QoS information of the service, the third priority, and the first indication information. In this case, the first UE may determine the third priority and the first indication information based on the first mapping relationship. If the first UE obtains the third priority and the first indication information by using the second information, the network device may determine the third priority of the first UE and the first indication information based on the mapping relationship between the QoS information of the service, the third priority, and the first indication information, or the network device may determine the third priority based on the mapping relationship (for example, the first mapping relationship) between the QoS information of the service and the third priority, and then determine the first indication information based on a mapping relationship (for example, referred to as a third mapping relationship) between the third priority and the first indication information.

Considering that the first threshold list is mainly used to avoid interference from an adjacent frequency domain resource, the first threshold list may be not only related to the QoS information of the service, but also related to a UE capability. For example, a larger ADC bit quantity supported by the UE indicates a smaller probability of ADC blocking due to impact of an interference signal, smaller ADC quantization noise, and larger tolerable interference power of the UE, that is, a larger tolerable RSRP measurement result of the UE. In this case, the threshold included in the first threshold list may be set to be large. Therefore, optionally, the first mapping relationship may further include UE capability information. For example, the first mapping relationship may include a mapping relationship between the QoS information of the service, the third priority, the UE capability information, and the first indication information. This is the same for the third mapping relationship. For example, the third mapping relationship may include a mapping relationship between the third priority, the UE capability information, and the first indication information. In this case, if the network device sends the second information to indicate the third priority and/or the first indication information, the network device may obtain the capability information of the first UE in advance. For example, the first UE may send the capability information of the first UE to the network device by using a second message, the first UE may send the capability information of the first UE to the network device by using another message, or the network device may obtain the capability information of the first UE from a core network (for example, an AMF).

Alternatively, the first UE may not determine the first indication information based on the second information or the first mapping relationship, but first obtain the third priority in the manner described above, and then obtain the first indication information based on the third priority after obtaining the third priority. For example, the first UE may determine the first indication information based on the third priority and the third mapping relationship. In this manner, there may be no mapping relationship between the first indication information and the QoS information of the service, but there is a mapping relationship between the first indication information and the third priority. The third mapping relationship may be preconfigured in the first UE, may be configured by a higher layer of the first UE, may be predefined in a protocol, or may be configured by the network device or another UE.

Alternatively, a process in which the first UE obtains the first indication information and a process in which the first UE obtains the fifth threshold may be two independent processes. For example, a manner in which the first UE obtains the first indication information includes: The first UE may receive first information from the network device, and the first information may indicate (or include) the first indication information. After receiving the first information from the network device, the first UE can determine the first indication information. The first information may be included in a third message, and the third message is, for example, dedicated signaling, for example, an RRC reconfiguration message or another message. If the first UE is in an RRC connected state, the first indication information may be determined in this manner. Optionally, the network device may determine the third priority based on the QoS information of the service. For a manner in which the network device obtains the QoS information of the service executed by the first UE, refer to the foregoing descriptions. For example, the network device determines the first indication information based on a second mapping relationship, where the second mapping relationship may include the mapping relationship between the QoS information of the service and the first indication information. Alternatively, the network device determines the third priority based on the first mapping relationship, and then determines the first indication information based on the third mapping relationship.

Alternatively, another manner in which the first UE obtains the first indication information includes: The first UE may receive first information from the network device, where the first information includes a second mapping relationship, so that the first UE can determine the first indication information based on the second mapping relationship. For example, when the first UE is in an RRC idle state, the first indication information may be obtained in this manner. The second information may be included in a third message, and the third message is, for example, common signaling, for example, a broadcast message (for example, a system message or another broadcast message). Optionally, the second mapping relationship may further include a piece of default first indication information. If the second mapping relationship includes the QoS information of the first UE, the first UE may determine that first indication information corresponding to the QoS information in the second mapping relationship is the first indication information corresponding to the first UE; or if the first mapping relationship does not include the QoS information of the first UE, the first UE may determine that the default first indication information is the first indication information corresponding to the first UE.

Alternatively, still another manner in which the first UE obtains the first indication information includes: The first UE obtains a preconfigured or predefined second mapping relationship, to determine the first indication information based on the second mapping relationship. For example, when the first UE is located outside network coverage, the first indication information may be obtained in this manner. The second mapping relationship may be preconfigured in the first UE, may be configured by a higher layer (for example, a MAC layer) of the first UE, may be predefined in a protocol, or the like. Optionally, the second mapping relationship may further include a piece of default first indication information. If the second mapping relationship includes the QoS information of the first UE, the first UE may determine that first indication information corresponding to the QoS information in the first mapping relationship is the first indication information corresponding to the first UE; or if the second mapping relationship does not include the QoS information of the first UE, the first UE may determine that the default first indication information is the first indication information corresponding to the first UE.

Similarly, considering that the first threshold list is mainly used to avoid interference from an adjacent frequency domain resource, the first threshold list is not only related to the QoS information of the service, but also may be related to a UE capability. Therefore, optionally, the second mapping relationship may further include UE capability information. For example, the second mapping relationship may include a mapping relationship between the QoS information of the service, the UE capability information, and the first indication information. In this case, if the network device sends the first information to indicate the first indication information, the network device may obtain the capability information of the first UE in advance. For this content, refer to the foregoing descriptions. As described above, the first threshold list may include a plurality of thresholds, where different thresholds may correspond to different M. In addition, for each piece of M in the M list, the maximum tolerable interference power of the UE may be determined based on the QoS information, and then a corresponding RSRP threshold may be determined based on the UE capability (for example, an ADC bit quantity), a general phase noise model, an IBE template, and the like. Therefore, different M lists correspond to different threshold lists. A relationship between the threshold list and M may be that one threshold list (including one or more thresholds) may correspond to one or more M lists, and similarly, one M list may correspond to one or more threshold lists. In this case, the first UE not only needs to determine the first threshold list, but also needs to determine a corresponding M list.

For example, in addition to indicating the first indication information, the first information sent by the network device may further indicate an M list corresponding to the first indication information. For example, the second mapping relationship includes a mapping relationship between the QoS information of the service, the first indication information, and the M list, or includes a mapping relationship between the QoS information of the service, the first indication information, the UE capability information, and the M list. Based on this, the network device may determine the first indication information and the M list, and notify the first UE by using the first information. In the second mapping relationship, one piece of first indication information may correspond to one or more M lists. If the first indication information determined by the network device corresponds to a plurality of M lists, the network device may determine one of the plurality of M lists. Optionally, the network device may select a same M list for UEs working in a same resource pool.

Alternatively, the M list may be preconfigured in the first UE. For example, one M list is preconfigured in the first UE. Alternatively, one resource pool is applicable to one M list, and the M list may be configured by using resource pool configuration information, predefined in a protocol, or the like. That is, the first UE may obtain a preconfigured or predefined M list, or may determine the M list based on the resource pool configuration information. In the foregoing manner, the first UE may determine an M list.

In the foregoing process, an implementation of Xth information/the QoS information/the mapping relationship/the first indication information/the M list/the UE capability information is not limited. For example, the Xth information may directly include a specific parameter, or may provide an index, an identifier, or the like of an indicated parameter. For example, the first information indicates the first indication information, and the first indication information is specifically the third threshold list. In a possible implementation, the first information includes the third threshold list. In another possible implementation, a plurality of threshold lists (for example, different threshold lists correspond to different QoS information and/or UE capability information) are preconfigured (for example, predefined in a protocol). The first information may include an index of the third threshold list in the plurality of threshold lists, and does not need to include a specific third threshold list.

After obtaining the first indication information, the first UE may directly determine, based on the first indication information, the first threshold list used by the first UE. For example, the first indication information indicates the third threshold list, or indicates the index of the third threshold list. The first UE determines that the third threshold list is the first threshold list. For the first threshold list determined in this manner, interference caused by the second UE to the first UE is mainly considered, but interference caused by the first UE to the second UE may not be considered. For example, the second UE uses a 5-bit ADC, and the first UE uses a 10-bit ADC. A resource indicated by SCI sent by the second UE includes an interlace 2 in an interlace group 2. The first UE detects, in the resource listening window, that the first RSRP corresponding to the SCI is greater than the fifth threshold but less than the threshold in the first threshold list. Therefore, the first UE excludes only a resource of the interlace 2 in the interlace group 2 in the resource selection window, and does not exclude a frequency domain resource adjacent to the interlace 2. If the first UE exactly selects an interlace 1 in the interlace group 2 to send an SL sensing reference signal, an SL sensing reference signal sent by the second UE in the interlace 2 in the interlace group 2 may cause small interference to the first UE. However, because an ADC capability of the second UE is weak, the SL sensing reference signal sent by the first UE in the interlace 1 may cause large interference to the second UE.

Therefore, to avoid or reduce both the interference from the first UE to the second UE and the interference from the second UE to the first UE as much as possible, the first UE may determine the first threshold list based on the first indication information and second indication information. The first indication information indicates the first priority corresponding to the first UE, indicates the third threshold list, or may indicate other information corresponding to the first UE. The second indication information indicates a second priority corresponding to the second UE, indicates a threshold list (for example, a second threshold list) corresponding to the second UE, or may indicate other information corresponding to the second UE.

The first priority and the third priority of the first UE may be a same priority, or may be different priorities. For example, the third priority of the first UE may be a priority of a logical channel to be used for transmission of a communication signal of the UE. The first priority of the first UE may also be a priority of the logical channel, or may not be a priority of the logical channel. Alternatively, the first priority of the first UE may be a priority determined based on the priority of the logical channel and another priority. The first UE may indicate the third priority of the first UE by using SCI sent by the first UE. Optionally, the SCI may further indicate the first priority of the first UE.

This is the same for the second UE. For example, the second priority and the fourth priority of the second UE may be a same priority, or may be different priorities. For example, the fourth priority of the second UE may be a priority of a logical channel to be used for transmission of a communication signal of the UE. The fourth priority of the second UE may also be a priority of the logical channel, or may not be a priority of the logical channel. Alternatively, the second priority of the second UE may be a priority determined based on the priority of the logical channel and another priority. The second UE may indicate the fourth priority of the second UE by using SCI sent by the second UE. Optionally, the SCI may further indicate the second priority of the second UE. For example, the first SCI in S401 may indicate the second priority and/or the fourth priority of the second UE. For example, the first SCI includes indication information A and indication information B, where the indication information A indicates the second priority, and the indication information B indicates the fourth priority. Alternatively, if the second priority and the fourth priority are the same priority, the first SCI may indicate the second priority and the fourth priority by using one piece of indication information.

A manner in which the first UE determines the first threshold list based on the first indication information and the second indication information includes: The first UE may determine, based on the first indication information, the third threshold list originally corresponding to the first UE, determine, based on the second indication information, the second threshold list originally corresponding to the second UE, and then determine, based on the third threshold list and the second threshold list, the first threshold list finally used by the first UE. Alternatively, another manner in which the first UE determines the first threshold list based on the first indication information and the second indication information includes: The first UE may determine, based on both the first indication information and the second indication information, the first threshold list finally used by the first UE. In a determining process, the first UE may not actually obtain the third threshold list and/or the second threshold list.

In a manner in which the first UE determines the third threshold list based on the first indication information, the first indication information directly indicates (or includes) the third threshold list or the index of the third threshold list. Alternatively, in another manner in which the first UE determines the third threshold list based on the first indication information, the first indication information indicates the first priority, and the first UE may determine the third threshold list based on the first priority. In a manner in which the first UE determines the second threshold list based on the second indication information, the second indication information directly indicates (or includes) the second threshold list or an index of the second threshold list. Alternatively, in another manner in which the first UE determines the second threshold list based on the second indication information, the second indication information indicates the second priority, and the first UE may determine the second threshold list based on the second priority.

For example, if the first UE determines, based on the third threshold list and the second threshold list, the first threshold list finally used by the first UE, in a determining manner, the first threshold list is a list in the third threshold list and the second threshold list that includes a smaller threshold. For example, if the third threshold list includes {-100, -95, -90} dBm, and the second threshold list includes {-50, -40, -30} dBm, the first UE may use the third threshold list as the first threshold list.

Alternatively, in another determining manner, the threshold included in the first threshold list is a smaller value between a threshold included in the first threshold list and a threshold included in the second threshold list. For example, the third threshold list includes {-100, -95, -90} dBm, and the second threshold list includes {-98, -96, -94} dBm, where "-100" corresponds to "-98", "-95" corresponds to "-96", and "-90" corresponds to "-94". In the three correspondences, the first UE may select a smaller value from each correspondence to form the first threshold list, that is, the first threshold list includes {-100, -96, -94} dBm.

To further reduce interference, the first UE may further determine, based on the third threshold list, the second threshold list, and transmit power, the first threshold list finally used by the first UE. For example, the first UE may determine, based on a first list and the third threshold list, the first threshold list finally used by the first UE, where the first list is obtained based on the second threshold list and a transmit power difference. For example, the first list is obtained by summing each threshold included in the second threshold list and the transmit power difference. The transmit power difference may be a difference between transmit power of the first UE and transmit power of the second UE. For example, the transmit power of the first UE is subtracted from the transmit power of the second UE.

The first UE determines, based on the third threshold list, the second threshold list, and the transmit power, the first threshold list finally used by the first UE. In a determining manner, the first threshold list is a list in the third threshold list and the first list that includes a smaller value. Alternatively, in another determining manner, the threshold included in the first threshold list is a smaller value between a value included in the third threshold list and a value included in the first list. For this content, refer to the foregoing related descriptions.

Optionally, the first SCI from the second UE may indicate the transmit power of the second UE. Alternatively, the first SCI may not indicate the transmit power of the second UE, but presets minimum transmit power of the UE. For example, the minimum transmit power of the UE is preset in a resource pool/specified in a protocol, and the first UE may use the minimum transmit power as the transmit power of the second UE.

In embodiments of this application, a frequency domain resource included in a "resource" may be a subchannel, an interlace, an interlace group, an RB set, or the like. As described above, time domain positions of the M resources are the same as the time domain position of the first resource. The following describes resources included in the M resources for different frequency domain granularities of the "resource".

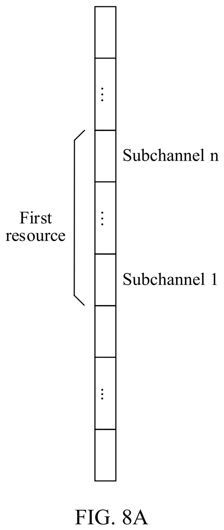

Optionally, the frequency domain resource included in the "resource" is the subchannel, or it is understood as that a minimum frequency domain unit for resource allocation is the subchannel. The first resource may include one subchannel, or include a plurality of consecutive subchannels. If M is a positive even number, the M resources may include M/2 subchannels whose end frequency domain position is a start frequency domain position (for example, a frequency domain position of a start subchannel included in the first resource) of the first resource, and include M/2 subchannels whose start frequency domain position is an end frequency domain position (for example, a frequency domain position of an end subchannel included in the first resource) of the first resource. It may be understood as that the M resources may include M/2 subchannels distributed on each of two sides of the first resource. As shown in FIG. 8A, one rectangular box represents one subchannel, and the first resource may include a plurality of consecutive subchannels, where a subchannel 1 is the start subchannel of the first resource, and a subchannel n is the end subchannel of the first resource. The M resources may include M/2 downward subchannels from a subchannel 0, and include M/2 upward subchannels from a subchannel n+1.

If M is an odd number, the M resources may include $\lceil M/2 \rceil$ subchannels whose end frequency domain position is the start frequency domain position of the first resource, and include [M/2] subchannels whose start frequency domain position is the end frequency domain position of the first resource. Alternatively, if M is the odd number, the M resources may include [M/2] subchannels whose end frequency domain position is the start frequency domain position of the first resource, and include $\lceil M/2 \rceil$ subchannels whose start frequency domain position is the end frequency domain position of the first resource. $\lceil x \rceil$ represents rounding up x to the nearest integer, and $\lfloor x \rfloor$ represents rounding down x to the nearest integer.

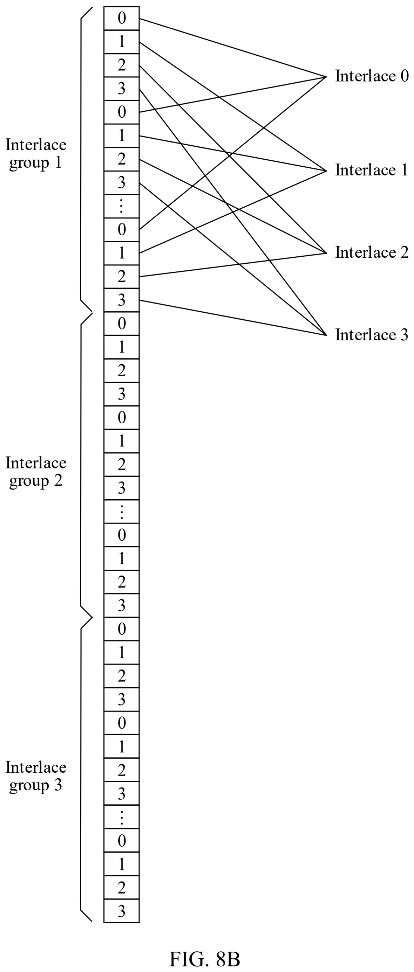

Alternatively, the frequency domain resource included in the "resource" is the interlace, or it is understood as that a minimum frequency domain unit for resource allocation is the interlace. For example, the SL sensing reference signal may occupy a frequency domain resource in an interlace manner. In the interlace manner, one group of consecutive frequency domain resources may be further multiplexed in a comb manner. As shown in FIG. 8B, one group of consecutive REs may be further divided into four interlaces. Based on different offsets (offsets), the four interlaces are respectively an interlace 0, an interlace 1, an interlace 2, and an interlace 3. One rectangular box in FIG. 8B represents one RE. The group of consecutive REs may be considered as an interlace group (group) or an interlace set (set). Alternatively, one group of consecutive PRBs or RBs may be used as one interlace group, and one interlace in one interlace group may include a plurality of PRBs or RBs distributed at an equal interval. In this case, one rectangular box in FIG. 8B may alternatively represent one PRB or RB. For example, if the first resource includes N interlaces, the M resources may include one or more of the following: N1 interlaces whose end frequency domain position is a start frequency domain position of the first resource, N2 interlaces whose start frequency domain position is an end frequency domain position of the first resource, or N3 interlaces between the N interlaces. The N3 interlaces may be all interlaces between the N interlaces. N1+N3+N3=M.

Still refer to FIG. 8B. For example, the first resource includes the interlace 2 in the interlace group 2. In this case, interlaces adjacent to the first resource upward include the interlace 1 and an interlace 0 in the interlace group 2, an interlace 3, an interlace 2, an interlace 1, and an interlace 0 in an interlace group 1, and the like. Interlaces adjacent to the first resource downward include an interlace 3 in the interlace group 2, an interlace 0, an interlace group 1, an interlace 2, and an interlace 3 in an interlace group 3, and the like. For example, if M=4, the M resources may include the interlace 1 and the interlace 0 in the interlace group 2, and include the interlace 3 in the interlace group 2 and the interlace 0 in the interlace group 3. Optionally, during exclusion, an interlace in a same interlace group as the first resource may be preferentially excluded, to reduce interference to a greater extent. For example, if M=3, the interlace 1, the interlace 0, and the interlace 3 in the interlace group 2 may be excluded.

The foregoing uses an example in which the first resource includes one interlace. In addition, the first resource may alternatively include a plurality of interlaces. For example, the first resource includes the interlace 1 and the interlace 2 in the interlace group 2. In this case, resources adjacent to the first resource upward sequentially include the interlace 0 in the interlace group 2, the interlace 3, the interlace 2, the interlace 1, and the interlace 0 in the interlace group 1, and the like. Resources adjacent to the first resource downward sequentially include the interlace 3 in the interlace group 2, the interlace 0, the interlace 1, the interlace 2, and the interlace 3 in the interlace group 3, and the like. Corresponding resources may be selected as the M resources based on M. For another example, the first resource includes the interlace 2 in the interlace group 1 and the interlace 2 in the interlace group 2. In this case, resources adjacent to the first resource downward sequentially include the interlace 3 in the interlace group 2, the interlace 0, the interlace 1, the interlace 2, and the interlace 3 in the interlace group 3, and the like. Resources adjacent to the first resource upward sequentially include the interlace 1 and the interlace 0 in the interlace group 1, an interlace 3, an interlace 2, an interlace 1, and an interlace 0 in an interlace group 0, and the like. Resources between the first resources include the interlace 1 and the interlace 0 in the interlace group 2, and include the interlace 3 in the interlace group 1. Corresponding resources may be selected as the M resources based on M.

Alternatively, the frequency domain resource included in the "resource" is the interlace group. In this case, a minimum frequency domain granularity for resource allocation may be the interlace group or the interlace. Even if the minimum granularity for resource allocation is the interlace, degrees of interference caused to different interlaces in a same interlace group differ slightly. Therefore, resource exclusion may be performed based on the interlace group. For example, if the first resource includes one or more interlaces, and the first resource is in one interlace group, or is in a plurality of consecutive interlace groups, the M resources may include one or more of the following: a remaining interlace other than the first resource in the one or more interlace groups that the first resource is in, all interlaces in K1 interlace groups whose end frequency domain position is a start frequency domain position of a start interlace group of the first resource, or all interlaces in K2 interlace groups whose start frequency domain position is an end frequency domain position of an end interlace group of the first resource. K1+K2=M-1.

For example, the first resource includes the interlace 2 in the interlace group 2, and remaining interlaces other than the first resource in the interlace group that the first resource is in include the interlace 0, the interlace 1, and the interlace 3 in the interlace group 2. The start interlace group of the first resource is the interlace group 2, and interlace groups whose end frequency domain position is the start frequency domain position of the start interlace group of the first resource may include the interlace group 3, an interlace group 4, and the like. The end interlace group of the first resource is the interlace group 2, and interlace groups whose start frequency domain position is the end frequency domain position of the end interlace group of the first resource include the interlace group 1, the interlace group 0, and the like.

In the foregoing manner, the first UE may exclude, from the candidate resource set, a resource reserved by another UE and a resource to which strong interference is caused by the another UE. However, there are still a part of resources, and interference caused by a single UE to the resources may be small, but total interference caused by a plurality of UEs to the resources may exceed the maximum tolerable interference power of the first UE. Optionally, the resources may also be excluded.

For example, in addition to receiving the first SCI from the second UE in the resource listening window, the first UE may further receive SCI from another UE. For example, the first UE further receives second SCI from a third UE. The first UE may obtain fourth RSRP based on information corresponding to the second SCI. For a manner in which the first UE obtains the fourth RSRP, refer to the foregoing manner in which the first UE obtains the first RSRP. The second SCI may be associated with a third resource. For example, in an association manner, the second SCI indicates the third resource. Alternatively, in another association manner, the third resource is a resource adjacent to, in frequency domain, a resource indicated by the second SCI, and the adjacency includes direct adjacency or indirect adjacency. Optionally, the third resource may belong to the M resources, or may not belong to the M resources. For example, refer to FIG. 7. That the second SCI indicates the resource D is used as an example. In this case, the resource D may be the third resource, or the resource C may be used as the third resource. A time domain position of the third resource may be the same as the time domain position of the first resource. It may be understood as that, for a resource indicated by SCI from another UE, the first UE may determine, by using the first threshold list, whether a resource that has a same time domain position as the resource needs to be excluded, and optionally, may further determine, based on SCI from a plurality of UEs, whether the resource that has the same time domain position as the resource needs to be excluded.

The first UE may determine, based on the fourth RSRP, the first RSRP, and a fourth threshold, whether to exclude the third resource from the candidate resource set, the second resource set, or the first resource set. For example, a resource set obtained by performing the exclusion process is referred to as a third resource set, and the first UE may select a resource from the third resource set to send the SL information. For example, the first UE may directly determine, based on the first RSRP, the fifth threshold, the first threshold list, and the fourth threshold, whether to exclude one or more of the first resource, the second resource, or the third resource from the candidate resource set, to directly obtain the third resource set. Alternatively, the first UE may first obtain the second resource set, and then determine, based on the first RSRP, the first threshold list, and the fourth threshold, whether to exclude the second resource and/or the third resource from the second resource set, to obtain the third resource set. Alternatively, the first UE may first obtain the second resource set, then obtain the first resource set, and then determine, based on the first RSRP and the fourth threshold, whether to exclude the third resource from the first resource set, to obtain the third resource set. Optionally, if the first UE directly obtains the third resource set, the half-duplex limitation of the UE may be considered. For example, the first UE may determine the third resource set based on received SCI, or the first UE may determine the third resource set based on the received SCI and the half-duplex limitation status. For this, refer to the foregoing related descriptions of obtaining the second resource set.

For example, the first UE superimposes the fourth RSRP and the first RSRP (for example, calculates a sum of the fourth RSRP and the first RSRP) to obtain fifth RSRP, and the first UE may determine, based on the fifth RSRP and the fourth threshold, whether to exclude the third resource. For example, if the fifth RSRP is greater than the fourth threshold, the third resource may be excluded from the candidate resource set, the second resource set, or the first resource set; or if the fifth RSRP is less than or equal to the fourth threshold, the third resource may not need to be excluded. The fourth threshold may be preconfigured in the first UE, may be configured by a higher layer of the first UE, may be predefined in a protocol, or may be configured by the network device or another UE. For example, the fourth threshold may be the maximum tolerable interference power that is of the first UE and that is determined based on the QoS information of the service executed by the first UE and/or the capability information of the first UE.

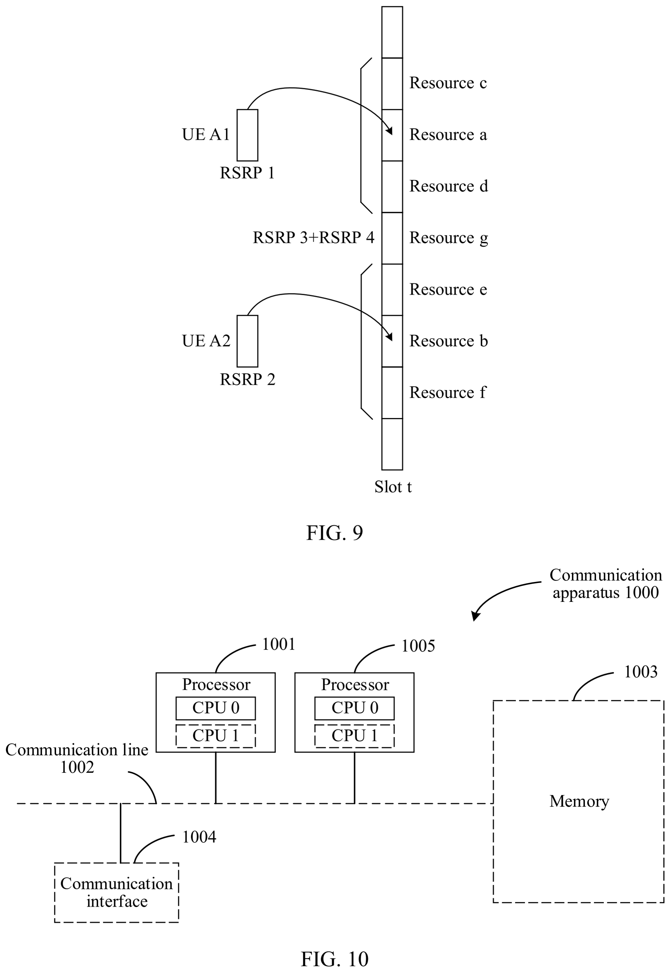

As shown in FIG. 9, the first UE receives SCI from a UE A1 and SCI from a UE A2 in the resource listening window. RSRP obtained by the first UE through measurement for the SCI of the UE A1 is RSRP 1, and RSRP obtained through measurement for the SCI of the UE A2 is RSRP 2. The SCI of the UE A1 indicates a resource a of a slot t in the candidate resource set, and the SCI of the UE A2 indicates a resource b of the slot t in the candidate resource set. It can be learned that time domain resources of the resource a and the resource b are the same. According to the foregoing solution, the first UE may determine, based on the RSRP 1, whether to exclude the resource a and adjacent resources c and d of the resource a, and determine, based on the RSRP 2, whether to exclude the resource b and adjacent resources e and f of the resource b. However, a resource g in the figure is not within an exclusion range determined by the first UE according to the foregoing solution. For example, the first threshold list is {threshold 2.1, threshold 2.2, ..., threshold 2.r}, the RSRP 1 is greater than the threshold 2.1 and less than or equal to the threshold 2.2, and M resources corresponding to the threshold 2.1 do not include the resource g. That is, it indicates that the first UE considers that interference caused by the UE A1 on the resource g is small; and/or the first UE considers that interference caused by transmission of the first UE on the resource g to the UE A1 is also small. It can be learned from the foregoing solution that the first UE does not exclude the resource g. Similarly, based on the RSRP 2, the resource g does not need to be excluded according to the foregoing solution. In this case, the first UE may determine, based on information corresponding to the SCI of the UE A1, power RSRP 3 of the interference that may be caused by the UE A1 on the resource g, and determine, based on information corresponding to the SCI of the UE A2, power RSRP 4 of the interference that may be caused by the UE A1 on the resource g. If RSRP 3+RSRP 4 is greater than the fourth threshold, the first UE may exclude the resource g. If RSRP 3+RSRP 4 is not greater than the fourth threshold, the first UE does not exclude the resource g. In this manner, the first UE may exclude more resources to which interference may be caused, to further improve transmission quality.

For clarity of description, in embodiments of this application, descriptions are provided based on exclusion of a resource indicated by SCI or exclusion of a resource adjacent to the resource indicated by the SCI. As described above, when performing resource exclusion, the UE may determine, by using each candidate resource in the candidate resource set as a main body, whether the candidate resource overlaps the resource indicated by the SCI or a frequency domain resource adjacent to the resource indicated by the SCI, determine whether the candidate resource and C-1 periodic resources corresponding to the candidate resource overlap the resource indicated by the SCI or the frequency domain resource adjacent to the resource indicated by the SCI, or determine whether the candidate resource and the C-1 periodic resources corresponding to the candidate resource overlap the resource indicated by the SCI and Q periodic resources that may be reserved by using the SCI, or frequency domain resources adjacent to the resource indicated by the SCI and the Q periodic resources that may be reserved by using the SCI. If there is an overlap, the candidate resource is excluded from the candidate resource set. In other words, when resource exclusion is actually performed, the candidate resource in the candidate resource set may be used as an exclusion body, instead of the resource indicated by the SCI. In embodiments of this application, a resource exclusion range is mainly increased, and specifications about the mode 2 in an existing protocol may be reused for other steps. According to the specifications in embodiments of this application, if an adjacent frequency domain resource that needs to be excluded exceeds a range of the candidate resource set, the adjacent frequency domain resource may be automatically ignored. Optionally, two resources "overlapping" described in embodiments of this application may be completely or partially overlapping.

In embodiments of this application, the first UE may exclude, based on the first threshold list, a resource adjacent to a resource indicated by SCI of another UE, thereby reducing interference between the UEs to a greater extent, and improving information transmission quality. For the first threshold list used by the first UE, in addition to a case of the first UE, another UE may be considered (for example, the second priority or the second threshold list of the second UE is considered). In this way, in addition to reducing interference caused by the another UE to the first UE, this further helps reduce interference caused by the first UE to the another UE. In embodiments of this application, comprehensive interference caused by a plurality of UEs on a resource may be further comprehensively considered in an RSRP superimposition manner, to further reduce interference to the first UE. In addition, in embodiments of this application, SCI may be listened in a plurality of resource pools, so that an interference elimination range is further enlarged. This helps reduce or eliminate interference in a larger range.

FIG. 10 is a diagram of a structure of a communication apparatus according to an embodiment of this application. The communication apparatus 1000 may be the first UE in the embodiment shown in FIG. 4 or a circuit system of the first UE, and is configured to implement the method corresponding to the first UE in the foregoing method embodiment. Alternatively, the communication apparatus 1000 may be the second UE in the embodiment shown in FIG. 4 or a circuit system of the second UE, and is configured to implement the method corresponding to the second UE in the foregoing method embodiment. Alternatively, the communication apparatus 1000 may be the network device in the embodiment shown in FIG. 4 or a circuit system of the network device, and is configured to implement the method corresponding to the second UE in the foregoing method embodiment. For example, a circuit system is a chip system.

The communication apparatus 1000 includes at least one processor 1001. The processor 1001 may be configured for internal processing of the apparatus, to implement a specific control processing function. Optionally, the processor 1001 includes instructions. Optionally, the processor 1001 may store data. Optionally, different processors may be independent devices, and may be located at different physical positions, or may be located on different integrated circuits. Optionally, different processors may be integrated into one or more processors, for example, integrated into one or more integrated circuits.

Optionally, the communication apparatus 1000 includes one or more memories 1003, configured to store instructions. Optionally, the memory 1003 may further store data. The processor and the memory may be separately disposed, or may be integrated together.

Optionally, the communication apparatus 1000 includes a communication line 1002 and at least one communication interface 1004. The memory 1003, the communication line 1002, and the communication interface 1004 are all optional, and therefore are all represented by dashed lines in FIG. 10.

Optionally, the communication apparatus 1000 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 1000 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 1001 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1002 may include a path for transmission of information between the foregoing components.

The communication interface 1004 is any apparatus like a transceiver, and is configured to communicate with another device or a communication network, for example, Ethernet, a radio access network (radio access network, RAN), a wireless local area network (wireless local area network, WLAN), or a wired access network.

The memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Bluray disc, or the like), a disk storage medium or another magnetic storage device, or any other medium that can be used to carry or store expected program code in a form of instructions or a data structure and that can be accessed by a computer, but is not limited thereto. The memory 1003 may exist independently, and is connected to the processor 1001 through the communication line 1002. Alternatively, the memory 1003 may be integrated with the processor 1001.

The memory 1003 is configured to store computer-executable instructions for executing the solutions of this application, and the processor 1001 controls the execution. The processor 1001 is configured to execute the computer-executable instructions stored in the memory 1003, to implement the steps performed by the first UE, the second UE, or the network device in the embodiment shown in FIG. 4.

Optionally, the computer-executable instructions in this embodiment of this application may also be referred to as application program code. This is not specifically limited in this embodiment of this application.

During specific implementation, in an embodiment, the processor 1001 may include one or more CPUs such as a CPU 0 and a CPU 1 in FIG. 10.

During specific implementation, in an embodiment, the communication apparatus 1000 may include a plurality of processors such as the processor 1001 and a processor 1005 in FIG. 10. Each of the processors may be a single-core (single-CPU) processor or a multi-core (multi-CPU) processor. The processor herein may be one or more devices, circuits, and/or processing cores configured to process data (for example, computer program instructions).

When the apparatus shown in FIG. 10 is a chip, for example, a chip in the first UE, a chip in the second UE, or a chip in the network device, the chip includes the processor 1001 (which may further include the processor 1005), the communication line 1002, and the communication interface 1004. Optionally, the chip may include the memory 1003. Specifically, the communication interface 1004 may be an input interface, a pin, a circuit, or the like. The memory 1003 may be a register, a cache, or the like. The processor 1001 and the processor 1005 each may be a general-purpose CPU, a microprocessor, an ASIC, or one or more integrated circuits configured to control program execution of the resource exclusion method in any one of the foregoing embodiments.

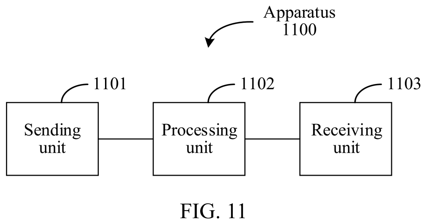

In embodiments of this application, division into functional modules may be performed on the apparatus based on the foregoing method examples. For example, division into functional modules may be performed based on corresponding functions, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in actual implementation. For example, when division into functional modules is performed based on corresponding functions, FIG. 11 is a diagram of an apparatus. The apparatus 1100 may be the first UE, the second UE, or the network device in the foregoing method embodiment, or a chip in the first UE, a chip in the second UE, or a chip in the network device. The apparatus 1100 includes a sending unit 1101, a processing unit 1102, and a receiving unit 1103.

It should be understood that the apparatus 1100 may be configured to implement the steps performed by the first UE, the second UE, or the network device in the resource exclusion method in embodiments of this application. For related features, refer to the embodiment shown in FIG. 4. Details are not described herein again.

Optionally, functions/implementation processes of the sending unit 1101, the receiving unit 1103, and the processing unit 1102 in FIG. 11 may be implemented by the processor 1001 in FIG. 10 by invoking the computer-executable instructions stored in the memory 1003. Alternatively, a function/an implementation process of the processing unit 1102 in FIG. 11 may be implemented by the processor 1001 in FIG. 10 by invoking the computer-executable instructions stored in the memory 1003, and functions/implementation processes of the sending unit 1101 and the receiving unit 1103 in FIG. 11 may be implemented through the communication interface 1004 in FIG. 10.

Optionally, when the apparatus 1100 is the chip or a circuit, the functions/implementation processes of the sending unit 1101 and the receiving unit 1103 may alternatively be implemented through a pin, a circuit, or the like.

This application further provides a computer-readable storage medium. The computer-readable storage medium stores a computer program or instructions. When the computer program or the instructions are run, the method performed by the first UE, the second UE, or the network device in the foregoing method embodiment is implemented. In this way, the functions in the foregoing embodiments may be implemented in a form of a software functional unit and sold or used as an independent product. Based on such an understanding, the technical solutions of this application essentially, or the part making contributions, or a part of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE, the second UE, or the network device in any one of the foregoing method embodiments.

An embodiment of this application further provides a processing apparatus, including a processor and an interface. The processor is configured to perform the method performed by the first UE, the second UE, or the network device in any one of the foregoing method embodiments.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logical units and circuits described in embodiments of this application may implement or operate the described functions via a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable disk, a CD-ROM, or any other form of storage medium in the art. For example, the storage medium may connect to the processor, so that the processor can read information from the storage medium and write information into the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different components in the terminal device.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a function specified in one or more procedures in the flowcharts and/or in one or more blocks in the block diagrams.

Content in embodiments of this application may be mutually referenced. Unless otherwise specified or logically conflicted, terms and/or descriptions in different embodiments are consistent and may be mutually referenced, and technical features in different embodiments may be combined based on an internal logical relationship thereof, to form a new embodiment.

It may be understood that, in embodiments of this application, the first UE, the second UE, and/or the network device may perform some or all of the steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

## Claims

1. A resource exclusion method, applied to a first terminal device, wherein the method comprises:

    receiving first sidelink control information SCI from a second terminal device, wherein the first SCI indicates a first resource; and
    determining, based on first reference signal received power RSRP and a first threshold list, whether to exclude a second resource from a candidate resource set, wherein the first RSRP is RSRP corresponding to the first SCI, and the second resource comprises a resource that shares a same time domain position as that the first resource and is adjacent to the first resource in a frequency domain position.

2. The method according to claim 1, wherein determining, based on the first RSRP and the first threshold list, whether to exclude the second resource from the candidate resource set comprises:
excluding the second resource from the candidate resource set when the first RSRP is greater than at least one threshold in the first threshold list.

3. The method according to claim 2, wherein the first threshold list comprises at least two thresholds comprising a first threshold and a second threshold, the first threshold is adjacent to the second threshold, the second threshold is greater than the first threshold, and excluding the second resource from the candidate resource set when the first RSRP is greater than the at least one threshold in the first threshold

list comprises:

excluding $M_1$ resources corresponding to the first threshold from the candidate resource set when the first RSRP is greater than the first threshold and less than or equal to the second threshold; or
the first threshold list further comprises a third threshold, the third threshold is adjacent to the second threshold, and the third threshold is greater than the second threshold, excluding $M_2$ resources corresponding to the second threshold from the candidate resource set when the first RSRP is greater than the second threshold and less than or equal to the third threshold, wherein
$M_1$ and $M_2$ are both positive integers, and $M_2$ is greater than $M_1$.

4. The method according to claim 2, wherein the first threshold list comprises at least one threshold, and excluding the second resource from the candidate resource set when the first RSRP is greater than the at least one threshold in the first threshold list comprises:
excluding $M_r$ resources corresponding to a last threshold from the candidate resource set when the first RSRP is greater than the last threshold in the at least one threshold, wherein $M_r$ is a positive integer.

5. The method according to any one of claims 1 to 4, wherein the first SCI further indicates a second priority corresponding to the second terminal device, or indicates a second threshold list corresponding to the second terminal device; and the first threshold list is determined based on a first priority or a third threshold list, and the second priority or the second threshold list, the third threshold list is a threshold list corresponding to the first terminal device, and the first priority is a priority corresponding to the first terminal device.

6. The method according to any one of claims 1 to 5, wherein the method further comprises:

receiving first information from a network device, wherein the first information comprises first indication information; and determining the first threshold list based on the first indication information;
receiving first information from a network device, wherein the first information comprises a second mapping relationship; determining the first indication information based on the second mapping relationship; and determining the first threshold list based on the first indication information, wherein the second mapping relationship comprises a mapping relationship between quality of service QoS information of a service and the first indication information; or
determining the first indication information based on the preconfigured or predefined second mapping relationship, and determining the first threshold list based on the first indication information, wherein
the first indication information indicates the first priority corresponding to the first terminal device, or indicates the third threshold list corresponding to the first terminal device.

7. The method according to claim 6, wherein the second mapping relationship comprises a mapping relationship between the QoS information of the service, capability information of a terminal device, and the first indication information.

8. The method according to claim 6 or 7, wherein the first information further indicates a value list of M, and M is a quantity of resources comprised in the second resource.

9. The method according to any one of claims 1 to 7, wherein

a value list of M is preconfigured or predefined; or
a value list of M is configured by using resource pool configuration information, and the resource pool configuration information is used to configure a resource pool for the first terminal device, wherein
M is a quantity of resources comprised in the second resource.

10. The method according to any one of claims 1 to 9, wherein the method further comprises:
measuring information corresponding to the first SCI, to obtain second RSRP, wherein the first RSRP is the second RSRP.

11. The method according to claim 10, wherein measuring the information corresponding to the first SCI, to obtain the second RSRP comprises:

measuring a demodulation reference signal DMRS carried on a physical sidelink control channel PSCCH on which the first SCI is located, to obtain third RSRP, wherein the third RSRP is the second RSRP, or the second RSRP is obtained based on the third RSRP and a power difference;
measuring a DMRS carried on a physical sidelink shared channel PSSCH scheduled by using the first SCI, to obtain third RSRP, wherein the third RSRP is the second RSRP, or the second RSRP is obtained based on the third RSRP and a power difference;

measuring a signal scheduled by using the first SCI, to obtain the second RSRP; or

measuring the first SCI, to obtain the second RSRP, wherein the first SCI is a sequence.

12. The method according to any one of claims 1 to 11, wherein the first resource comprises one subchannel or a plurality of consecutive subchannels, the second resource comprises the M resources, M is an even number, and the M resources comprise M/2 subchannels whose end frequency domain position is a start frequency domain position of the first resource, and comprise M/2 subchannels whose start frequency domain position is an end frequency domain position of the first resource.

13. The method according to any one of claims 1 to 11, wherein the first resource comprises N interlaces, the second resource comprises the M resources, and the M resources comprise one or more of the following:

N1 interlaces whose end frequency domain position is a start frequency domain position of the first resource;

N2 interlaces whose start frequency domain position is an end frequency domain position of the first resource; or

N3 interlaces between the N interlaces, wherein the N3 interlaces are all interlaces between the N interlaces, wherein

$$N1+N3+N3=M.$$

14. The method according to any one of claims 1 to 11, wherein the first resource is in one interlace group or a plurality of consecutive interlace groups, the second resource comprises the M resources, and the M resources comprise one or more of the following:

a remaining interlace other than the first resource in the one or more interlace groups;

all interlaces in K1 interlace groups whose end frequency domain position is a start frequency domain position of a start interlace group of the first resource; or

all interlaces in K2 interlace groups whose start frequency domain position is an end frequency domain position of an end interlace group of the first resource, wherein

$$K1+K2=M-1.$$

15. The method according to any one of claims 1 to 14, wherein the method further comprises:

receiving second SCI from a third terminal device, wherein the second SCI is associated with a third resource in the candidate resource set, and a time domain position of the third resource is the same as the time domain position of the first resource; and

determining, based on fourth RSRP, the first RSRP, and a fourth threshold, whether to exclude the third resource, wherein the fourth RSRP is RSRP corresponding to the second SCI.

16. The method according to any one of claims 1 to 15, wherein the method further comprises:
receiving SCI from another terminal device in a part or all of resource pools supported by the first terminal device.

17. The method according to any one of claims 1 to 16, wherein the second resource and the first resource are within a first bandwidth range, and the first bandwidth range is a signal detection range supported by the first terminal device.

18. A communication apparatus, wherein the communication apparatus comprises a processing unit and a transceiver unit, and the processing unit is coupled to the transceiver unit, to perform the method according to any one of claims 1 to 17.

19. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 17.

20. A computer-readable storage medium, wherein the computer-readable storage medium is configured to store a computer program, and when the computer program is run on a computer, the computer is enabled to perform the method according to any one of claims 1 to 17.

21. A computer program product, wherein the computer program product comprises a computer program, and when the computer program is run on a computer, the computer is enabled to perform the method according to any one of claims 1 to 17.

22. A chip system, wherein the chip system comprises: a processor and an interface, wherein the processor is configured to invoke instructions from the interface and run the instructions; and when the processor executes the instructions, the method according to any one of claims 1 to 17 is implemented.

FIG. 1

Comb 0

Comb 1

Dual-link
loss

Sensing
UE 1

Sensing
target

Sensing
UE 2

FIG. 2

UE 1 ←——————→ UE 2

FIG. 3

| First UE | | Second UE |

S401: First SCI (indicating a first resource)

S402: Determine a second resource set based on the first resource

S403: Determine, based on first RSRP and a first threshold list, whether to exclude a second resource from a candidate resource set or the second resource set, where the second resource includes a resource that shares a time domain position as the first resource and is adjacent to the first resource in a frequency domain position

FIG. 4

Frequency

Resource listening
window

Resource selection
window

RSRP>
Threshold 1

RSRP>Threshold 1
RSRP>Threshold 2

$n-T_0$    $n-T_{proc,0}$    n    $n+T_1$    $n+T_2$    Time

SCI is
detected

Excluded
resource
indicated by
the SCI

Excluded
adjacent
resource

FIG. 5A

FIG. 5B

$M_1$ $M_2$ $M_r$

... 

Threshold 2.1  Threshold 2.2  Threshold 2.3          Threshold 2.r          RSRP

FIG. 6

Resource A

Resource B

Resource C

RSRP 1          RSRP 2          RSRP 3          Resource D

Resource E

Resource F

Resource G

FIG. 7

FIG. 8A

FIG. 8B

UE A1

RSRP 1

RSRP 3+RSRP 4

UE A2

RSRP 2

Resource c

Resource a

Resource d

Resource g

Resource e

Resource b

Resource f

Slot t

FIG. 9

Communication
apparatus 1000

1001

1005

1003

Processor

CPU 0

CPU 1

Processor

CPU 0

CPU 1

Memory

Communication line
1002

1004

Communication
interface

FIG. 10

Apparatus
1100

1101 1102 1103

| Sending unit | Processing unit | Receiving unit |

FIG. 11

## INTERNATIONAL SEARCH REPORT

| | International application No. |
|---|---|
| | **PCT/CN2024/070932** |

### A. CLASSIFICATION OF SUBJECT MATTER

H04W 72/40(2023.01)i; H04W72/54(2023.01)i

According to International Patent Classification (IPC) or to both national classification and IPC

### B. FIELDS SEARCHED

Minimum documentation searched (classification system followed by classification symbols)

IPC: H04W, H04B

Documentation searched other than minimum documentation to the extent that such documents are included in the fields searched

Electronic data base consulted during the international search (name of data base and, where practicable, search terms used)

CNTXT; ENTXTC; DWPI; ENTXT; CNKI; IEEE; 3GPP: 模式2, 侧链, 边链, 侧行链路, 参考信号, 接收功率, 阈值, 排除, 资源, 频域, 频率, 相邻, 邻近, sidelink, SCI, RSRP, threshold, exclud??, resource, frequency, adjacent, neighbor+, mode2

### C. DOCUMENTS CONSIDERED TO BE RELEVANT

| Category* | Citation of document, with indication, where appropriate, of the relevant passages | Relevant to claim No. |
|---|---|---|
| X | CN 115701157 A (SPREADTRUM COMMUNICATIONS (SHANGHAI) CO., LTD.) 07 February 2023 (2023-02-07) description, paragraphs 0042-0109, and figures 1-5 | 1, 2, 10, 11, 16-22 |
| Y | CN 115701157 A (SPREADTRUM COMMUNICATIONS (SHANGHAI) CO., LTD.) 07 February 2023 (2023-02-07) description, paragraphs 0042-0109, and figures 1-5 | 5 |
| Y | CN 114205863 A (ASUSTEK COMPUTER INC.) 18 March 2022 (2022-03-18) description, paragraphs 0361 and 0368-0369 | 5 |
| X | WO 2022265397 A1 (LG ELECTRONICS INC.) 22 December 2022 (2022-12-22) description, paragraphs 94-121, and figure 8 | 1, 2, 10, 11, 16-22 |
| A | CN 110731117 A (GUANGDONG OPPO MOBILE COMMUNICATIONS CO., LTD.) 24 January 2020 (2020-01-24) entire document | 1-22 |
| A | CN 113196845 A (TELEFONAKTIEBOLAGET LM ERICSSON) 30 July 2021 (2021-07-30) entire document | 1-22 |

✓ Further documents are listed in the continuation of Box C.     ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 March 2024** | **22 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

# EP 4 694 508 A1

**INTERNATIONAL SEARCH REPORT**

International application No.

**PCT/CN2024/070932**

**C.    DOCUMENTS CONSIDERED TO BE RELEVANT**

| Category* | Citation of document, with indication, where appropriate, of the relevant passages | Relevant to claim No. |
|---|---|---|
| A | WO 2022070284 A1 (NTT DOCOMO, INC.) 07 April 2022 (2022-04-07) entire document | 1-22 |

Form PCT/ISA/210 (second sheet) (July 2022)

## INTERNATIONAL SEARCH REPORT
### Information on patent family members

| International application No. |
|---|
| **PCT/CN2024/070932** |

| Patent document cited in search report | | | Publication date (day/month/year) | Patent family member(s) | | | Publication date (day/month/year) |
|---|---|---|---|---|---|---|---|
| CN | 115701157 | A | 07 February 2023 | WO | 2023005144 | A1 | 02 February 2023 |
| CN | 114205863 | A | 18 March 2022 | US | 2022086803 | A1 | 17 March 2022 |
| | | | | KR | 20220037369 | A | 24 March 2022 |
| WO | 2022265397 | A1 | 22 December 2022 | EP | 4329401 | A1 | 28 February 2024 |
| | | | | KR | 20230172546 | A | 22 December 2023 |
| | | | | CN | 117480829 | A | 30 January 2024 |
| CN | 110731117 | A | 24 January 2020 | AU | 2019421242 | A1 | 22 July 2021 |
| | | | | KR | 20210112315 | A | 14 September 2021 |
| | | | | WO | 2020143065 | A1 | 16 July 2020 |
| | | | | JP | 2022521882 | A | 13 April 2022 |
| | | | | US | 2023217445 | A1 | 06 July 2023 |
| | | | | EP | 3886348 | A1 | 29 September 2021 |
| | | | | US | 2021337573 | A1 | 28 October 2021 |
| CN | 113196845 | A | 30 July 2021 | TW | 202025812 | A | 01 July 2020 |
| | | | | EP | 3861807 | A1 | 11 August 2021 |
| | | | | WO | 2020069879 | A1 | 09 April 2020 |
| | | | | US | 2021392620 | A1 | 16 December 2021 |
| WO | 2022070284 | A1 | 07 April 2022 | US | 2023371051 | A1 | 16 November 2023 |

Form PCT/ISA/210 (patent family annex) (July 2022)

**REFERENCES CITED IN THE DESCRIPTION**

**Patent documents cited in the description**

- CN 202310491891

- CN 202310544376